Europäisches Patentamt

(19) European Patent Office

Office européen des brevets

(11) EP 0 844 501 A2

(12) **EUROPEAN PATENT APPLICATION**

(43) Date of publication:
27.05.1998 Bulletin 1998/22

(51) Int. Cl.$^6$: **G02B 6/16**

(21) Application number: 97120624.8

(22) Date of filing: 25.11.1997

(84) Designated Contracting States:
AT BE CH DE DK ES FI FR GB GR IE IT LI LU MC NL PT SE
Designated Extension States:
AL LT LV MK RO SI

(30) Priority: 26.11.1996 JP 314970/96
24.12.1996 JP 342279/96

(71) Applicant:
SUMITOMO ELECTRIC INDUSTRIES, LTD.
Osaka-shi, Osaka 541 (JP)

(72) Inventors:
• Fujii, Takashi,
c/o Sumitomo Elec. Ind. Ltd.
Yokohama-shi, Kanagawa 244 (JP)

• Matsuda, Yasuo,
c/o Sumitomo Elec. Ind. Ltd.
Yokohama-shi, Kanagawa 244 (JP)
• Hosoya, Toshifumi,
c/o Sumitomo Elec. Ind. Ltd.
Yokohama-shi, Kanagawa 244 (JP)
• Ikeji, Maki,
c/o Sumitomo Elec. Ind. Ltd.
Yokohama-shi, Kanagawa 244 (JP)

(74) Representative:
Hansen, Bernd, Dr. Dipl.-Chem. et al
Hoffmann Eitle,
Patent- und Rechtsanwälte,
Arabellastrasse 4
81925 München (DE)

(54) **Plastic optical fibre with two cores**

(57) The present invention provides a plastic optical fiber comprising a cladding, a first core disposed inside the cladding, and a second core disposed inside the first core; wherein a ratio X of a diameter (D2) of the second core to a diameter (D1) of the first core (=D2/D1) and a ratio Y of a difference ($n_1 - n_0$) between a refractive index ($n_1$) of the first core and a refractive index ($n_0$) of the cladding to a difference ($n_2 - n_0$) between a refractive index of the second core ($n_2$) and the refractive index ($n_0$) of the cladding (=($n_1 - n_0$)/($n_2 - n_0$)) satisfy the following relational expressions: $0.3 \leq X \leq 0.95$, $0.4 \leq Y \leq 0.95$, $1 \leq X + Y \leq 1.9$.

**Fig.2**

EP 0 844 501 A2

**Description**

BACKGROUND OF THE INVENTION

Field of the Invention

The present invention relates to a plastic optical fiber.

Related Background Art

Plastic optical fiber has been used for communications over a relatively short distance in automobiles and between computers, office machines, and the like , since it yields a transmission loss greater than optical fiber made of glass.

The diameter of the plastic optical fiber is much greater than that of the optical fiber made of glass. Accordingly, step index (SI) type plastic optical fiber whose core has a constant refractive index yields a narrower bandwidth. Namely, when the diameter of optical fiber is large as in the case of the plastic optical fiber, a large difference in transmission time is generated between an optical pulse propagating through the core in the vicinity of its center and an optical pulse propagating through the periphery thereof separated from the center. As a result, the waveform of pulse collapses in a greater extent, thus narrowing the bandwidth. Here, "bandwidth" refers to the number of optical pulses per unit length which can be transmitted through a single optical fiber by a distance at which a predetermined attenuation factor is attained.

Also known as plastic optical fiber is that of graded index (GI) type in which the refractive index of the core becomes lower as the distance from the center axis is greater. In the GI-type plastic optical fiber, the distance in transmission time between the optical pulse propagating through the center of the core and the optical pulse propagating through the periphery of the core becomes smaller, whereby the pulse waveform is restrained from collapsing, thus yielding a broader bandwidth.

On the other hand, Japanese Patent Application Laid-Open No. 60-119509 discloses a plastic optical fiber comprising a plurality of cores having refractive indices different from each other, while each core has a constant refractive index. This plastic optical fiber is made by a method comprising the steps of preparing two or more kinds of polymerizable materials which yield refractive indices different from each other after being polymerized, and successively polymerizing these polymerizable materials under a centrifugal force so that the refractive index of the polymerized fiber changes concentrically from the outer peripheral portion toward the center portion. In order to attain a broad bandwidth in this plastic optical fiber, however, it is necessary to use four or more core layers having different refractive indices.

SUMMARY OF THE INVENTION

The inventors have studied the conventional plastic optical fibers having the configurations mentioned above. Problems found as a result are that the bandwidth of the SI-type plastic optical fiber, which is easy to manufacture, is limited to about 150 MHz · 100 m, and that, though the plastic optical fiber having four or more core layers with refractive indices different from each other or the GI-type plastic optical fiber yields a broader bandwidth, it complicates manufacturing conditions, thus becoming difficult to manufacture.

It is an object of the present invention to provide a plastic optical fiber which overcomes the problems mentioned above, yields a broad bandwidth, and can be made easily.

In order to obtain a plastic optical fiber overcoming the above-mentioned problems, the inventors have extensively studied the refractive index profile and ratio of diameters of three core layers in plastic optical fiber comprising the three core layers and a cladding, which can be made relatively easily, thus being excellent in productivity. As a result, the inventors have found a plastic optical fiber which, while having three core layers, can yield a bandwidth of 200 MHz · 100 m or more that has conventionally been unavailable.

Namely, the present invention provides a plastic optical fiber comprising a cladding, a first core disposed inside the cladding, a second core disposed inside the first core, and a third core disposed inside the second core;

wherein a ratio X1 of a diameter (D3) of the third core to a diameter (D1) of the first core (= D3/D1 ),

a ratio X2 of a diameter (D2) of the second core to the diameter (D1) of the first core (= D2/D1 ),

a ratio Y1 of a difference ($n_3 - n_2$) between a refractive index ($n_3$) of the third core and a refractive index ($n_2$) of the second core to a difference ($n_3 - n_0$) between the refractive index ($n_3$) of the third core and a refractive index ($n_0$) of the cladding (= ($n_3 - n_2$)/($n_3 - n_0$) ), and

a ratio Y2 of a difference ($n_3 - n_1$) between the refractive index ($n_3$) of the third core and a refractive index ($n_1$) of the first core to the difference ($n_3 - n_0$) between the refractive index ($n_3$) of the third core and the refractive index ($n_0$) of the cladding (= ($n_3 - n_1$)/($n_3 - n_0$) ) satisfy the following relational expressions:

2

$$0.53 \leq X1 \leq 0.67,$$

$$0.77 \leq X2 \leq 0.97,$$

$$0.07 \leq Y1 \leq 0.14,$$

$$0.27 \leq Y2 \leq 0.93.$$

Also, the present invention provides a method of making the above-mentioned plastic optical fiber comprising:

a first step of injecting a first polymerizable material inside a cylindrical tube and polymerizing the first polymerizable material so as to form a cladding layer inside the cylindrical tube;
a second step of injecting a second polymerizable material inside the cladding layer and polymerizing the second polymerizable material so as to form a first core layer inside the cladding layer;
a third step of injecting a third polymerizable material inside the first core layer and polymerizing the third polymerizable material so as to form a second core layer inside the first core layer such that a ratio X2 of a thickness of the second core layer to a thickness of the first core layer satisfies the following relational expression:

$$0.77 \leq X2 \leq 0.97;$$

a fourth step of injecting a fourth polymerizable material inside the second core layer and polymerizing the fourth polymerizable material so as to form a third core layer inside the second core layer such that a ratio X1 of a thickness of the third core layer to the thickness of the first core layer, a ratio Y1 of a difference $(n_3 - n_2)$ between a refractive index $(n_3)$ of the third core layer and a refractive index $(n_2)$ of the second core layer to a difference $(n_3 - n_0)$ between the refractive index $(n_3)$ of the third core layer and a refractive index $(n_0)$ of the cladding layer $(= (n_3 - n_2)/(n_3 - n_0))$, and a ratio Y2 of a difference $(n_3 - n_1)$ between the refractive index $(n_3)$ of the third core layer and a refractive index $(n_1)$ of the first core layer to the difference $(n_3 - n_0)$ between the refractive index $(n_3)$ of the third core layer and the refractive index $(n_0)$ of the cladding layer $(= (n_3 - n_1)/(n_3 - n_0))$ satisfy the following relational expressions:

$$0.53 \leq X1 \leq 0.67,$$

$$0.07 \leq Y1 \leq 0.14,$$

$$0.27 \leq Y2 \leq 0.93;$$

a fifth step of extinguishing a space inside the third core layer so as to form a columnar preform for the plastic optical fiber; and
a sixth step of thermally drawing the preform to yield the plastic optical fiber.
On the other hand, in order to obtain a plastic optical fiber overcoming the above-mentioned problems, the inventors have extensively studied the refractive index profile and ratio of diameters of two core layers in plastic optical fiber comprising the two core layers and a cladding, which can be made relatively easily, thus being excellent in productivity. As a result, the inventors have found a plastic optical fiber which, while having two core layers, can yield a bandwidth of 200 MHz · 100 m or more that has conventionally been unavailable.

Namely, the present invention provides a plastic optical fiber comprising a cladding, a first core disposed inside the cladding, and a second core disposed inside the first core;
wherein a ratio X of a diameter (D2) of the second core to a diameter (D1) of the first core (= D2/D1), and

a ratio Y of a difference $(n_1 - n_0)$ between a refractive index $(n_1)$ of the first core and a refractive index $(n_0)$ of the cladding to a difference $(n_2 - n_0)$ between a refractive index $(n_2)$ of the second core and the refractive index $(n_0)$ of the cladding $(= (n_1 - n_0)/(n_2 - n_0))$ satisfy the following relational expressions:

$$0.3 \leq X \leq 0.95,$$

$$0.4 \leq Y \leq 0.95,$$

$$1 \leq X + Y \leq 1.9.$$

Also, the present invention provides a method of making the above-mentioned plastic optical fiber comprising:

a first step of injecting a first polymerizable material inside a cylindrical tube and polymerizing the first polymerizable material so as to form a cladding layer inside the cylindrical tube;

a second step of injecting a second polymerizable material inside the cladding layer and polymerizing the second polymerizable material so as to form a first core layer inside the cladding layer such that a difference $(n_1 - n_0)$ between a refractive index $(n_1)$ of the first core layer and a refractive index $(n_0)$ of the cladding layer becomes a predetermined value;

a third step of injecting a third polymerizable material inside the first core layer and polymerising the third polymerizable material so as to form a second core layer inside the first core layer such that a ratio X of a thickness of the second core layer to a thickness of the first core layer, and a ratio Y of a difference $(n_1 - n_0)$ between a refractive index $(n_1)$ of the first core layer and a refractive index $(n_0)$ of the cladding layer to a difference $(n_2 - n_0)$ between a refractive index $(n_2)$ of the second core layer and the refractive index $(n_0)$ of the cladding layer $(= (n_1 - n_0)/(n_2 - n_0))$ satisfy the following relational expressions:

$$0.3 \leq X \leq 0.95,$$

$$0.4 \leq Y \leq 0.95,$$

$$1 \leq X + Y \leq 1.9;$$

a fourth step of extinguishing a space inside the second core layer so as to form a columnar preform for the plastic optical fiber; and

a fifth step of thermally drawing the preform to yield the plastic optical fiber.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

BRIEF DESCRIPTION OF THE DRAWINGS

Fig. 1 is a perspective view showing an appearance of a plastic optical fiber in accordance with a first embodiment of the present invention;

Fig. 2 is a chart showing a refractive index distribution of the plastic optical fiber shown in Fig. 1;

Fig. 3 is a sectional view showing an example of preform manufacturing apparatus used for carrying out a method of making a plastic optical fiber in accordance with the present invention;

Fig. 4 is a perspective view showing a cladding layer corresponding to a cladding;

Fig. 5 is a perspective view showing a laminated cylinder corresponding to the cladding and first core;

Fig. 6 is a perspective view showing a laminated cylinder corresponding to the cladding, first core, and second core;

Fig. 7 is a perspective view showing a laminated cylinder corresponding to the cladding, first core, second core, and third core;

Fig. 8 is a preform formed by thermally shrinking the laminated cylinder shown in Fig. 7;

Fig. 9 is a perspective view showing an appearance of a plastic optical fiber in accordance with a second embodiment of the present invention;

Fig. 10 is a chart showing a refractive index distribution of the plastic optical fiber shown in Fig. 9;

Fig. 11 is a perspective view showing a cladding layer corresponding to a cladding;

Fig. 12 is a perspective view showing a laminated cylinder corresponding to the cladding and first core;

Fig. 13 is a perspective view showing a laminated cylinder corresponding to the cladding, first core, and second core;

Fig. 14 is a preform formed by thermally shrinking the laminated cylinder shown in Fig. 13; and

Fig. 15 is a chart showing a refractive index distribution of a modified example of the plastic optical fiber shown in Fig. 9.

## DETAILED DESCRIPTION OF THE PREFERRED EMBODIMENTS

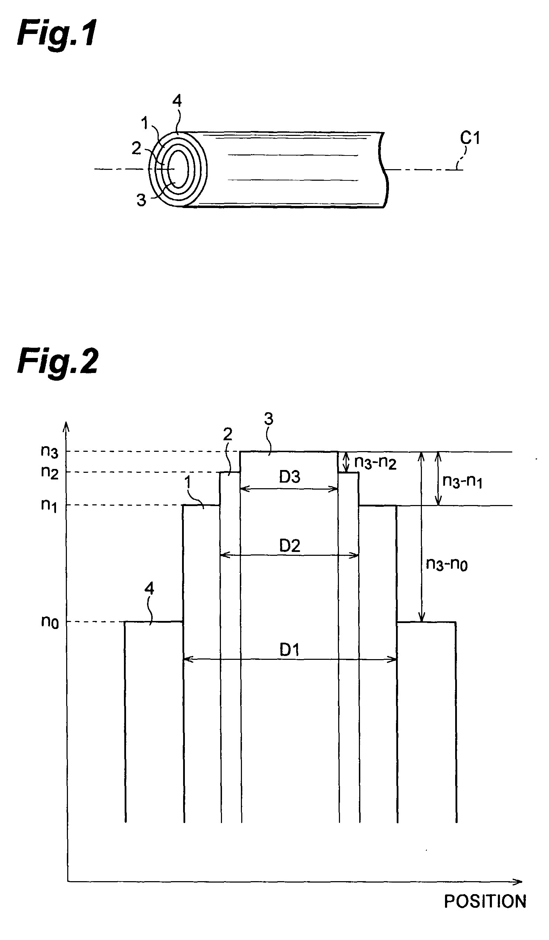

In the following, preferred embodiments of plastic optical fiber and method of making the same in accordance with the present invention will be explained with reference to Figs. 1 to 15.

Fig. 1 is a perspective view showing an appearance of a plastic optical fiber (hereinafter referred to as "POF") in accordance with a first embodiment of the present invention. Fig. 2 is a chart showing a refractive index distribution of the POF shown in Fig. 1.

As shown in Fig. 1, this POF comprises a cladding 4, a first core 1 disposed inside the cladding 4, a second core 2 disposed inside the first core 1, a third core 3 disposed inside the second core 2. In the POF, as shown in Fig. 2,

a ratio X1 of a diameter (D3) of the third core 3 to a diameter (D1) of the first core 1 ($= D3/D1$ ),

a ratio X2 of a diameter (D2) of the second core 2 to the diameter (D1) of the first core 1 ($= D2/D1$ ),

a ratio Y1 of a difference ($n_3 - n_2$) between a refractive index ($n_3$) of the third core 3 and a refractive index ($n_2$) of the second core 2 to a difference ($n_3 - n_0$) between the refractive index ($n_3$) of the third core 3 and a refractive index ($n_0$) of the cladding 4 ($= (n_3 - n_2)/(n_3 - n_0)$ ), and

a ratio Y2 of a difference ($n_3 - n_1$) between the refractive index ($n_3$) of the third core 3 and a refractive index ($n_1$) of the first core 1 to the difference ($n_3 - n_0$) between the refractive index ($n_3$) of the third core 3 and the refractive index ($n_0$) of the cladding 4 ($= (n_3 - n_1)/(n_3 - n_0)$ ) satisfy the following relational expressions:

$$0.53 \leq X1 \leq 0.67,$$

$$0.77 \leq X2 \leq 0.97,$$

$$0.07 \leq Y1 \leq 0.14,$$

$$0.27 \leq Y2 \leq 0.93.$$

The bandwidth narrows when X1 deviates from its range noted above, and X1 is preferably at least 0.56 but not greater than 0.64. The bandwidth narrows when X2 deviates from its range noted above, and X2 is preferably at least 0.80 but not greater than 0.95. The bandwidth narrows when Y1 deviates from its range noted above, and Y1 is preferably at least 0.09 but not greater than 0.12. The bandwidth narrows when Y2 deviates from its range noted above, and Y2 is preferably at least 0.30 but not greater than 0.90.

The refractive index in the present invention refers to a value in a flat portion of a refractive index distribution. The diameters of cores 1, 2, and 3 and cladding 4 are defined by their respective positions where the gradient of the refractive index distribution curve is the steepest.

Such POF has a bandwidth (e.g., 350 to 1,600 MHz $\cdot$ 100 m) which is much broader than that of the conventional POF. Also, since its core comprises three layers, it can be made more easily than the conventional POF having four or more core layers or GI-type POF, whereby a preform for POF can have a larger size, thus allowing cost to decrease as well.

Preferably, in the POF in accordance with this embodiment, a ratio $\Delta n$ of a difference ($n_3 - n_0$) between the refractive index ($n_3$) of the third core 3 and the refractive index ($n_0$) of the cladding 4 to the refractive index ($n_0$) of the cladding 4 ($= (n_3 - n_0)/n_0$ ) satisfies the following relational expression:

$$0.015 \leq \Delta n \leq 0.035.$$

When $\Delta n$ deviates from this range, there is a tendency that the problem of the eye-safety occurs, the loss increase due to the POF bent becomes larger and the bandwidth narrows. The lower limit of ($n_3 - n_0$) is 0.01, and preferably 0.02. On the other hand, the upper limit of ($n_3 - n_0$) is 0.1, and preferably 0.07. The bending characteristic of the POF tends to deteriorate when ($n_3 - n_0$) is below the lower limit, whereas the bandwidth tends to narrow when ($n_3 - n_0$) is beyond the upper limit.

In the POF in accordance with the first embodiment of the present invention, the diameter (D1) of the first core 1 is preferably within the range of 0.3 to 1.0 mm, and more preferably within the range of 0.5 to 0.8 mm. Also, the diameter (D2) of the second core 2 is preferably within the range of 0.2 to 0.9 mm, and more preferably within the range of 0.3 to 0.7 mm. Further, the diameter (D3) of the third core 3 is preferably within the range of 0.1 to 0.8 mm, and more preferably within the range of 0.2 to 0.6 mm.

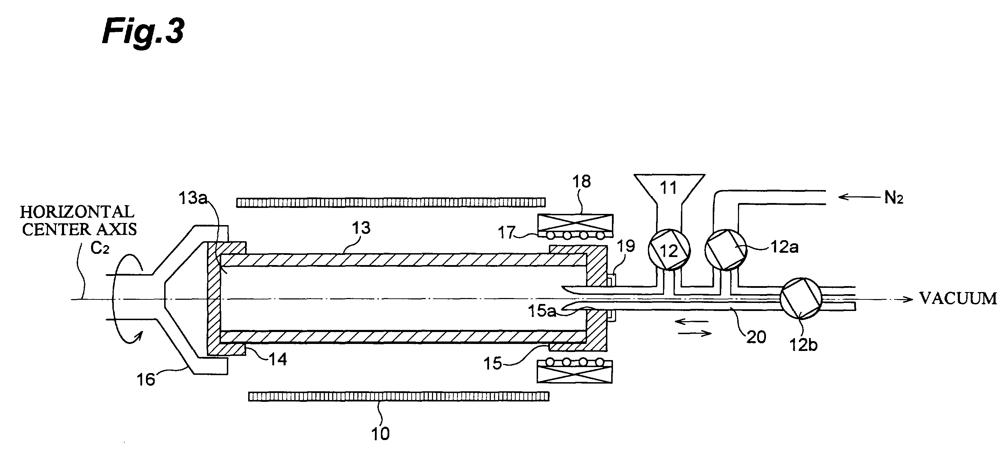

In the following, a method of making the POF in accordance with the first embodiment of the present invention will be explained with reference to Figs. 3 to 8.

Fig. 3 is a sectional view showing an example of preform manufacturing apparatus for making a preform of the POF in accordance with the present invention. Depicted in Fig. 3 are a cylindrical heating source 10, a polymerizable material supply port 11, a polymerizable material supply pipe cock 12, a nitrogen gas supply pipe cock 12a, a vacuuming exhaust pipe cock 12b, a forming cylinder 13, a cylinder end sealing lid 14, a cylinder end opening lid 15, a rotary driving force transmitting chuck 16, a cylinder supporting bearing 17, a cylinder supporting axis securing table 18, a sealing rubber flexible ring 19, and a supply pipe 20.

As shown in Fig. 3, the cylinder 13 has one end covered with the cylinder end opening lid 15 and is horizontally held. Projecting into the cylinder 13 through an opening portion 15a of the lid 15 is one end of the supply pipe 20. In this state, the polymerizable material supply pipe cock 12 is opened, so that a predetermined amount of an organic optical material (first polymerizable material), by which the cladding 4 is to be formed, is injected inside the cylinder 13 from the supply port 11 through the supply pipe 20. Here, the first polymerizable material refers to a polymerizable plastic optical material for making the cladding 4. Thereafter, the other end of the cylinder 13 is sealed with the cylinder end sealing lid 14. Subsequently, the cylinder 13 is heated by the cylinder heating source 10, and the rotary driving force from a rotary driving apparatus (not depicted) is transmitted to the lid 14 through the chuck 16, thereby rotating the cylinder 13 around its center axis C2 indicated by a chain line. Consequently, a centrifugal force is applied to the first polymerizable material so that the latter is pressed against the inner wall of the cylinder 13. As a result, formed is a cladding layer 4a, which is to become the cladding 4, having a uniform refractive index distribution along the longitudinal axis of the cylinder 13 (first step).

The first polymerizable material mainly comprises a first monomer, a chain transfer agent, and a polymerization initiator. The first polymerizable material may contain a dopant and/or second monomer. The first monomer or second monomer is not restricted in particular as long as it has a desired thermal characteristic and is transparent when polymerized. Examples of the first monomer include methyl methacrylate (refractive index: 1.492), 2,2,2-trifluoroethyl methacrylate (refractive index: 1.418), 1,1,1,3,3,3-hexafluoroisopropyl methacrylate (refractive index: 1.39), styrene (refractive index: 1.59), benzyl methacrylate (refractive index: 1.568), 1,1,3-trihydroperfluoropropyl methacrylate (refractive index: 1.421), hexafluoroisopropyl 2-fluoroacrylate (refractive index: 1.36), 2,2,3,3-tetrafluoropropyl methacrylate (refractive index: 1.422) and the like. The second monomer is preferably selected from those listed as the examples of the first monomer and is used to copolymerize with the first monomer. The first monomer or second monomer is appropriately selected so as to obtain a desired stability or desired refractive index difference. In the POF of the present invention, from the viewpoint of transparency, methyl methacrylate or 2,2,2-trifluoroethyl methacrylate is preferable. The kind, amount, and the like of the chain transfer agent, which is used for restricting the molecular weight of polymerizing molecules within a predetermined range, are appropriately selected according to the chosen first monomer and second monomer and the strength of the POF to be manufactured. Examples of the chain transfer agent include n-butyl mercaptan, n-pentyl mercaptan, n-octyl mercaptan and the like. The polymerization initiator is appropriately selected according to the kind of the first monomer and second monomer. Examples of the polymerization initiator include benzyl peroxide (BPO), t-butyl peroxyisopropylcarbonate, t-butyl peroxyacetate, di-t-butyl peroxide and the like. Examples of the dopant include diphenyl sulfide (refractive index: 1.633), benzyl benzoate(refractive index: 1.568), benzyl n-butyl phthalate, diphenylmethane, diphenyl (refractive index: 1.587) and the like.

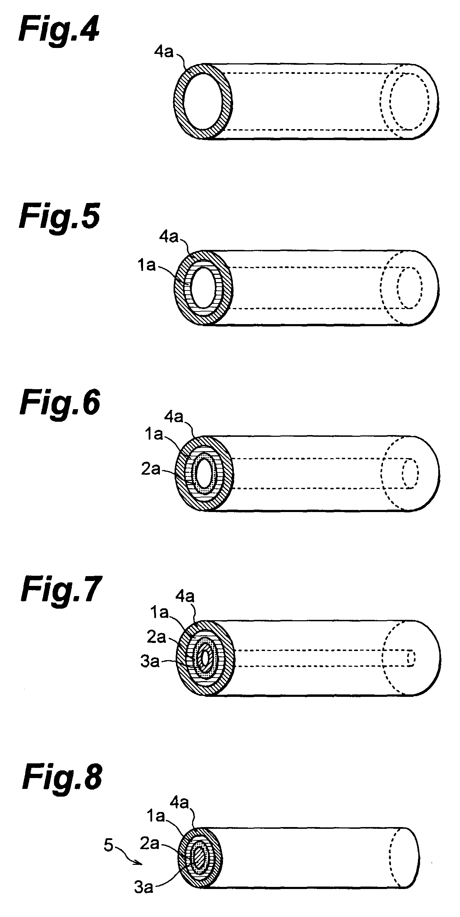

Thereafter, an organic optical material (second polymerizable material) for forming the first core 1 having a refractive index higher than that of the cladding 4 is selected. The second polymerizable material refers to a polymerizable plastic optical material for forming the first core 1. Subsequently, an operation similar to the first step is performed, whereby a first core layer 1a, which is to become the first core 1, is added to the inside of the cladding layer 4a as shown in Fig. 5 (second step). The second polymerizable material mainly comprises a first monomer, a chain transfer agent, and a polymerization initiator. The second polymerizable material may contain a dopant and/or second monomer for increasing the refractive index. The first monomer, second monomer, chain transfer agent, polymerization initiator and dopant used in the first step may also be used in the second step. Here, when the second polymerizable material contains the second monomer, particularly preferable as the second monomer is the one that can yield a refractive index higher than that of the monopolymer of the first monomer.

When the second polymerizable material contains a dopant in the second step, the dopant concentration in the second polymerizable material is preferably within the range of 1% to 20% by weight, though not restricted in particular. When the second polymerizable material contains a second monomer, the weight ratio of the second monomer to the first monomer is preferably within the range of 0.1 to 0.5, though not restricted in particular. The ratio of the injected amount of the second polymerizable material to that of the first polymerizable material is preferably within the range of 0.5 to 10.

Thereafter, an organic optical material (third polymerizable material) for forming the second core 2 having a refractive index higher than that of the first core 1 is selected. The third polymerizable material refers to a polymerizable plastic optical material for forming the second core 2. Subsequently, an operation similar to the first step is performed, whereby a second core layer 2a, which is to become the second core 2, is added to the inside of the first core layer 1a as shown in Fig. 6 (third step). The third polymerizable material mainly comprises a first monomer, a chain transfer agent, and a polymerization initiator. The third polymerizable material may contain a dopant and/or second monomer

6

for increasing the refractive index. The first monomer, second monomer, chain transfer agent, polymerization initiator and dopant used in the first or second step may also be used in the third step. Here, when the third polymerizable material contains the second monomer, particularly preferable as the second monomer is the one that can yield a refractive index higher than that of the monopolymer of the first monomer.

When the third polymerizable material contains a dopant in the third step, the dopant concentration in the third polymerizable material is preferably within the range of 1% to 30% by weight, though not restricted in particular. When the third polymerizable material contains a second monomer, the weight ratio of the second monomer to the first monomer is preferably within the range of 0.1 to 0.8, though not restricted in particular. The ratio of the injected amount of the third polymerizable material to that of the second polymerizable material is preferably within the range of 0.1 to 50, though not restricted in particular. When this ratio deviates from the above range, the outer diameter of a preform in drawing tends not to become 10 mm to 200 mm, which is the preferable one of the preform in drawing, in the case the shrinkage of the second and third polymerizable materials by curing is considered. Consequently, the ratio X2 of the thickness of the second core layer 2a to the thickness of the first core layer 1a can be set to a value at least 0.77 but not greater than 0.97.

Thereafter, an organic optical material (fourth polymerizable material) for forming the third core 3 having a refractive index higher than that of the second core 2 is selected. The fourth polymerizable material refers to a polymerizable plastic optical material for forming the third core 3. Subsequently, an operation similar to the third step is performed, whereby a third core layer 3a, which is to become the third core 3, is added to the inside of the second core layer 2a, which is to become the second core 2, as shown in Fig. 7 (fourth step). The fourth polymerizable material mainly comprises a first monomer, a chain transfer agent, and a polymerization initiator. The fourth polymerizable material may contain a dopant and/or second monomer for increasing the refractive index. The first monomer, second monomer, chain transfer agent, and polymerization initiator and dopant used in the first or second step may also be used in the fourth step. Here, when the fourth polymerizable material contains the second monomer, particularly preferable as the second monomer is the one that can yield a refractive index higher than that of the monopolymer of the first monomer.

When the fourth polymerizable material contains a dopant in the fourth step, the dopant concentration in the fourth polymerizable material is preferably within the range of 1% to 35% by weight, though not restricted in particular. When the fourth polymerizable material contains a second monomer, the weight ratio of the second monomer to the first monomer is preferably within the range of 0.1 to 1, though not restricted in particular. The ratio of the injected amount of the fourth polymerizable material to that of the third polymerizable material is preferably within the range of 0.1 to 5, though not restricted in particular. Consequently, the ratio X1 of the thickness of the third core layer 3a to the thickness of the first core layer 1a, the ratio Y1 of the difference $(n_3 - n_2)$ between the refractive index $(n_3)$ of the third core layer 3a and the refractive index $(n_2)$ of the second core layer 2a to the difference $(n_3 - n_0)$ between the refractive index $(n_3)$ of the third core layer 3a and the refractive index $(n_0)$ of the cladding layer 4a $(= (n_3 - n_2)/(n_3 - n_0))$, and the ratio Y2 of the difference $(n_3 - n_1)$ between the refractive index $(n_3)$ of the third core layer 3a and the refractive index $(n_1)$ of the first core layer 1a to the difference $(n_3 - n_0)$ between the refractive index $(n_3)$ of the third core layer 3a and the refractive index $(n_0)$ of the cladding layer 4a $(= (n_3 - n_1)/(n_3 - n_0))$ can satisfy the following relational expressions:

$$0.53 \leq X1 \leq 0.67,$$

$$0.07 \leq Y1 \leq 0.14,$$

$$0.27 \leq Y2 \leq 0.93.$$

Then, the resulting laminated cylinder is taken out from the cylinder 13. Thereafter, the laminated cylinder is heated while the space inside the laminated cylinder is vacuumed, whereby the columnar space inside the third core layer 3a is extinguished (i.e., collapsed) as shown in Fig. 8 (fifth step). Thus formed is a POF preform 5 having the cladding 4 and the three layers of the cores 1, 2, and 3 therewithin. In this preform 5, refractive index rises step by step along its radius toward the center axis thereof, while the cladding layer 4a, first core layer 1a, second core layer 2a, and third core layer 3a each have a uniform refractive index along their radii.

Thereafter, the preform 5 is held vertically, and is drawn while its lower end portion is being heated, so as to be spun (sixth step). As a result, the POF having a refractive index distribution such as that shown in Fig. 2 is manufactured.

In the POF of this embodiment, materials of individual layers may actually mingle with each other at their boundaries so as to yield a somewhat rounded profile. Over all the refractive index distribution of POF is shaped like steps as shown in Fig. 2,

In this case, the diameter (D1) of the first core 1, the diameter (D2) of the second core 2, and the diameter (D3) of the third core 3 are determined as follows.

First, six points on the plot of the refractive index are determined where the rate of change in the refractive index is large. The distance between the two points nearest to the central axis of the POF is the diameter (D3) of the third core 3, the distance between two other points next in distance from the axis, is the diameter (D2) of the second core 2, and the distance between the remaining two points farthest from the axis is the diameter (D1) of the first core 1.

The refractive index (n1) of the first core 1, the refractive index (n2) of the second core 2 and the refractive index (n3) of the third core 3 are determined as follows. In the first core 1, the second core 2 and the third core 3, five points on the plot of the refractive index are determined where the rate of change in refractive index is the smallest. The highest refractive index value at one point among the five points is the refractive index (n3) of the third core 3, the refractive index at two other points lower than the refractive index (n3) is the refractive index (n2) of the second core 2, and the lowest refractive index at the remaining two points is the refractive index (n1) of the first core 1. In the case where such a refractive index distribution is exhibited, the refractive index profile approximates a focusing distribution, whereby a POF having a broader bandwidth is likely to be obtained.

In order to obtain such a POF, the monomer is not completely polymerized in the first step of the method of making the POF in accordance with the first embodiment, and the second step is performed while a part of the monomer exists in an unpolymerized form. As a result, the unpolymerized monomer in the first polymerizable material mingles with the second polymerizable material. As polymerization proceeds while in this mixed state, the ratio of a polymer having a higher refractive index becomes lower as it is distanced farther from the boundary surface between the cladding layer 4a and first core layer 1a toward the cladding layer 4a, whereas this ratio becomes higher as the polymer is distanced farther from the boundary surface toward the first core layer 1a. As a result, in the POF thus obtained, the refractive index gradually increases from the cladding 4 toward the first core 1. Consequently, a gradual refractive index distribution is formed in the vicinity of the boundary surface between the cladding 4 and the first core 1. Similarly, without completely polymerizing the monomer in the second step, the third step is performed while a part of the monomer exists in an unpolymerized state. As a result, a gradual refractive index distribution is formed in the vicinity of the boundary surface between the first core 1 and the second core 2. Similarly, without completely polymerizing the monomer in the third step, the fourth step is performed while a part of the monomer exists in an unpolymerized state. As a result, a gradual refractive index distribution is formed in the vicinity of the boundary surface between the second core 2 and the third core 3. Thus manufactured POF preform 5 is thermally drawn so as to attain a desired diameter.

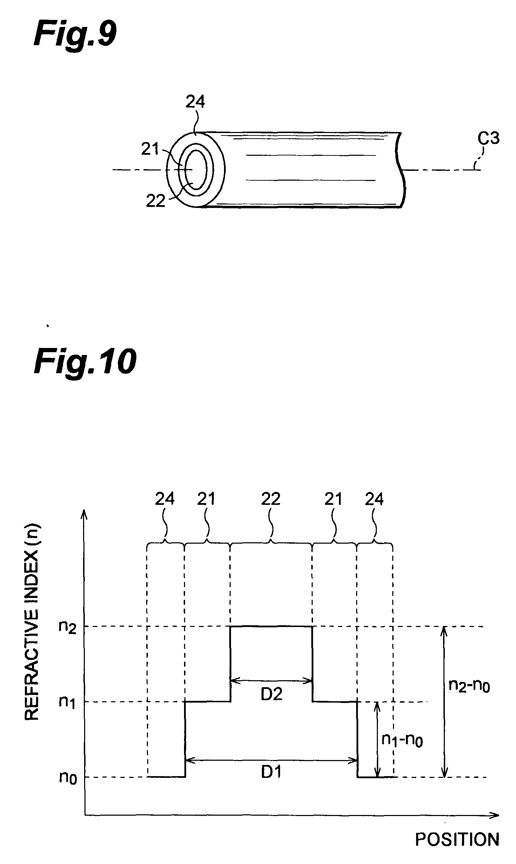

In the following, a POF and method of making the same in accordance with a second embodiment of the present invention will be explained with reference to Figs. 9 to 15.

Fig. 9 is a perspective view showing an appearance of the POF in accordance with the second embodiment of the present invention. Fig. 10 is a chart showing a refractive index distribution of the POF shown in Fig. 9.

As shown in Fig. 9, this POF comprises a cladding 24, a first core 21 disposed inside the cladding 24, and a second core 22 disposed inside the first core 21. In this POF, a ratio X of a diameter (D2) of the second core 22 to a diameter (D1) of the first core 21 ($= D2/D1$), a ratio Y of a difference ($n_1 - n_0$) between a refractive index ($n_1$) of the first core 21 and a refractive index ($n_0$) of the cladding 24 to a difference ($n_2 - n_0$) between a refractive index ($n_2$) of the second core 22 and the refractive index ($n_0$) of the cladding 24 ($= (n_1 - n_0)/(n_2 - n_0)$), and the sum of these two ratios ($X + Y$) are within their specific ranges which will be explained later.

On a section perpendicular to a center axis C3 of the POF, the diameter (D1) of the first core 21, the diameter (D2) of the second core 22, the difference ($n_2 - n_0$) between the refractive index ($n_2$) of the second core 22 and the refractive index ($n_0$) of the cladding 24, and the difference ($n_1 - n_0$) between the refractive index ($n_1$) of the first core 22 and the refractive index ($n_0$) of the cladding 24 attain a relationship shown in Fig. 10. These parameters are within the ranges respectively satisfying the following conditions.

The lower limit of X ($= D2/D1$) is 0.3, preferably 0.5, and more preferably 0.7. The upper limit of X is 0.95, and more preferably 0.90. When X deviates from the range defined by its upper and lower limit, the bandwidth may be on a par with that in the case of a single core layer, thus becoming insufficient.

The lower limit of Y ($= (n_1 - n_0)/(n_2 - n_0)$) is 0.4, preferably 0.5, and more preferably 0.6. The upper limit of Y is 0.95, preferably 0.90, and more preferably 0.80. When Y deviates from the range defined by its upper and lower limit, the bandwidth may be on a par with that in the case of a single core layer, thus becoming insufficient.

The lower limit of the sum ($X + Y$) of these ratios is 1, preferably 1.3, and more preferably 1.4. The upper limit of ($X + Y$) is 1.9, preferably 1.7, and more preferably 1.6. When ($X + Y$) deviates from the range defined by its upper and lower limit, the bandwidth may be on a par with that in the case of a single core layer, thus becoming insufficient. Since X and Y attain values within their corresponding ranges mentioned above while the value of ($X + Y$) is within its range mentioned above, the POF in accordance with the second embodiment of the present invention yields an improved optical characteristic, such as a broader bandwidth and a lower transmission loss in particular.

In the POF in accordance with the second embodiment of the present invention, the lower limit of ($n_2 - n_0$) is preferably 0.01, and more preferably 0.02. The upper limit of ($n_2 - n_0$) is preferably 0.1, and more preferably 0.07. Below the lower limit, the bending characteristic of the POF tends to deteriorate; whereas, beyond the upper limit, the bandwidth tends to narrow.

In the POF in accordance with the second embodiment of the present invention, the diameter (D1) of the first core 21 is preferably within the range of 0.3 to 1.0 mm, and more preferably within the range of 0.5 to 0.8 mm. The diameter (D2) of the second core 22 is preferably within the range of 0.1 to 0.9 mm, and more preferably within the range of 0.2 to 0.7 mm.

In the following, a method of making the POF in accordance with the second embodiment of the present invention will be explained with reference to Figs. 3 and 11 to 14.

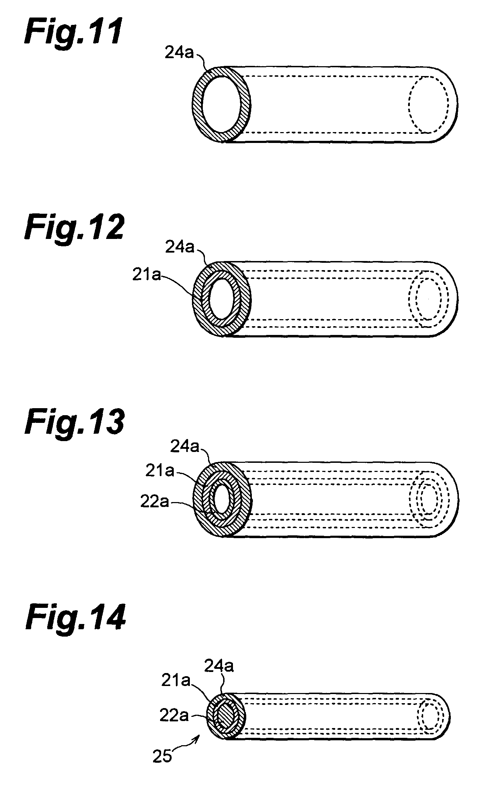

As shown in Fig. 3, the cylinder 13 has one end covered with the cylinder end opening lid 15 and is horizontally held. Projecting into the cylinder 13 through the opening portion 15a of the lid 15 is one end of the supply pipe 20. In this state, the polymerizable material supply pipe cock 12 is opened, so that a predetermined amount of an organic optical material (first polymerizable material), by which the cladding 24 is to be formed, is injected inside the cylinder 13 from the supply port 11 through the supply pipe 20. Here, the first polymerizable material refers to a polymerizable plastic optical material for making the cladding 24. Thereafter, the other end of the cylinder 13 is sealed with the cylinder end sealing lid 14 (e.g., aluminum tape). Subsequently, while the cylinder 13 is rotated around its center axis C2, the first polymerizable material is polymerized. As a result, a cladding layer 24a is obtained as shown in Fig. 11 (first step).

The first polymerizable material mainly comprises a first monomer, a chain transfer agent, and a polymerization initiator. The first polymerizable material may contain a dopant and/or second monomer. The first monomer or second monomer is not restricted in particular as long as it has a desired thermal characteristic and is transparent when polymerized. Examples of the first monomer include methyl methacrylate (refractive index: 1.492), 2,2,2-trifluoroethyl methacrylate (refractive index: 1.418), 1,1,1,3,3,3-hexafluoroisopropyl methacrylate (refractive index: 1.39), styrene (refractive index: 1.59), benzyl methacrylate (refractive index: 1.568), 1,1,3-trihydroperfluoropropyl methacrylate (refractive index: 1.421), hexafluoroisopropyl 2-fluoroacrylate (refractive index: 1.36), 2,2,3,3-tetrafluoropropyl methacrylate (refractive index: 1.422) and the like. The second monomer is preferably selected from those listed as the examples of the first monomer and is used to copolymerize with the first monomer. The first monomer or second monomer is appropriately selected so as to obtain a desired stability or desired refractive index difference. In the POF of the present invention, from the viepoint of transparency, methyl methacrylate or 2,2,2-trifluoroethyl methacrylate is preferable. The kind, amount, and the like of the chain transfer agent, which is used for restricting the molecular weight of polymerizing molecules within a predetermined range, are appropriately selected according to the chosen first and second monomer and the strength of the POF to be manufactured. Examples of the chain transfer agent include n-butyl mercaptan, n-pentyl mercaptan, n-octyl mercaptan and the like. The polymerization initiator is appropriately selected according to the kind of the first monomer and second monomer. Examples of the polymerization initiator include benzyl peroxide (BPO), t-butyl peroxyisopropylcarbonate, t-butyl peroxyacetate, di-t-butyl peroxide and the like. Examples of the dopant include diphenyl sulfide (refractive index: 1.633), benzyl benzoate(refractive index: 1.568), benzyl n-butyl phthalate, diphenylmethane, diphenyl (refractive index: 1.587) and the like.

Thereafter, an organic optical material (second polymerizable material) for forming the first core 21 having a refractive index higher than that of the cladding 24 is selected. The second polymerizable material refers to a polymerizable plastic optical material for forming the first core 21. Subsequently, while the lid 14 is taken out, the second polymerizable material is injected into the cylinder 13. Then, the cylinder 13 is covered with the lid 14 again. Also, an operation similar to the first step is performed, whereby a first core layer 21a, which is to become the first core 21, is added to the inside of the cladding layer 24a as shown in Fig. 12 (second step). The second polymerizable material mainly comprises a first monomer, a chain transfer agent, and a polymerization initiator. The second polymerizable material may contain a dopant and/or second monomer for increasing the refractive index. The first monomer, second monomer, chain transfer agent, polymerization initiator and dopant used in the first step may also be used in the second step. Here, when the second polymerizable material contains the second monomer, particularly preferable as the second monomer is the one that can yield a refractive index higher than that of the monopolymer of the first monomer.

When the second polymerizable material contains a dopant in the second step, the dopant concentration in the second polymerizable material is preferably within the range of 1% to 30% by weight, though not restricted in particular. When the second polymerizable material contains a second monomer, the weight ratio of the second monomer to the first monomer is preferably within the range of 0.1 to 0.5, though not restricted in particular. The ratio of the injected amount of the second polymerizable material to that of the first polymerizable material is preferably within the range of 0.1 to 50, though not restricted in particular. When this ratio deviates from the above range, the outer diameter of a preform in drawing tends not to become 10 mm to 200 mm, which is the preferable one of the preform in drawing, in the case the shrinkage of the first and second polymerizable materials by curing is considered.

Thereafter, an organic optical material (third polymerizable material) for forming the second core 22 having a refractive index higher than that of the first core 21 is selected. The third polymerizable material refers to a polymerizable plastic optical material for forming the second core 22. Subsequently, while the lid 14 is taken out, the third polymerizable material is injected into the cylinder 13. Then, the cylinder 13 is covered with the lid 14 again. Also, an operation similar to the first step is performed, whereby a second core layer 22a, which is to become the second core 22, is added to the inside of the first core layer 21a as shown in Fig. 13 (third step). The third polymerizable material mainly comprises a first monomer, a chain transfer agent, and a polymerization initiator. The third polymerizable material may contain a dopant and/or second monomer for increasing the refractive index. The first monomer, second monomer, chain transfer agent, polymerization initiator and dopant used in the first or second step may also be used in the third step. Here, when the third polymerizable material contains the second monomer, particularly preferable as the second monomer is the one that can yield a refractive index higher than that of the monopolymer of the first monomer.

When the third polymerizable material further contains a dopant in the third step, the dopant concentration in the third polymerizable material is preferably within the range of 1% to 35% by weight, though not restricted in particular. When the third polymerizable material contains a second monomer, the weight ratio of the second monomer to the first monomer is preferably within the range of 0.1 to 1, though not restricted in particular. The ratio of the injected amount of the third polymerizable material to that of the second polymerizable material is preferably within the range of 0.1 to 5, though not restricted in particular.

Thus, the ratio X of the thickness of the second core layer 22a to the thickness of the first core layer 21a, and the ratio Y of the difference $(n_1 - n_0)$ between the refractive index $(n_1)$ of the first core layer 21a and the refractive index $(n_0)$ of the cladding layer 24a to the difference $(n_2 - n_0)$ between the refractive index $(n_2)$ of the second corelayer 22a and the refractive index $(n_0)$ of the cladding layer 24a $(= (n_1 - n_0)/(n_2 - n_0))$ can satisfy the following relational expressions:

$$0.3 \leq X \leq 0.95,$$

$$0.4 \leq Y \leq 0.95,$$

$$1 \leq X + Y \leq 1.9.$$

Thereafter, the resulting laminated cylinder is collapsed while being heated, whereby a columnar POF preform 25 shown in Fig. 14 is obtained (fourth step). In this preform 25, refractive index rises step by step along its radius toward the center axis thereof, while the cladding layer 24a, first core layer 21a, and second core layer 22a each have a uniform refractive index along their radii.

Then, the preform 25 is held vertically, and is drawn while its lower end portion is being heated, so as to be spun (fifth step). As a result, the POF having a refractive index distribution such as that shown in Fig. 10 is manufactured.

In the POF of this embodiment, examples of the preferred combinations of the first, second and third polymerizable materials, which are to become the cladding 24, first core 21 and second core 22, respectively, are as follows.

In a first preferred combination, the first polymerizable material preferably contains 2,2,2-trifluoroethyl methacrylate (referred to as "3FM"), the second and third polymerizable materials both contain 3FM, methyl methacrylate (referred to as "MMA") and benzyl benzoate (referred to as "BEN"). In this case, the preferred composition of the first polymerizable material contains 100 parts by weight of 3FM (refractive index: 1.418), the second polymerizable material contains 10 parts by weight of MMA and BEN each added to 100 parts by weight of 3FM (refractive index: 1.437) and the preferred composition of the third polymerizable material contains 20 parts by weight of MMA and BEN each added to 100 parts by weight of 3FM (refractive index: 1.450). In the POF thus obtained, the ratio of the refractive index of the first core 21 minus the refractive index of the cladding 24 with respect to the refractive index of the cladding 24 is 0.0134. Also, the ratio of the refractive index of the second core 22 minus the refractive index of the cladding 24 with respect to the refractive index of the cladding 24 is 0.0226.

In a second preferred combination, the first polymerizable material contains MMA, the second polymerizable material preferably contains MMA and benzyl methacrylate (referred to as "BZMA"), and the third polymerizable material contains MMA, BZMA and diphenyl sulfide (referred to as "DPS"). In this case, the preferred composition of the first polymerizable material contains 100 parts by weight of MMA (refractive index: 1.492), the second polymerizable material contains 20 parts by weight of BEN added to 100 parts by weight of MMA (refractive index: 1.505) and the preferred composition of the third polymerizable material contains 20 parts by weight of DPS and 30 parts by weight of BEN added to 100 parts by weight of MMA (refractive index: 1.526). In the POF thus obtained, the ratio of the refractive index of the first core 21 minus the refractive index of the cladding 24 with respect to the refractive index of the cladding 24 is 0.0085. Also, the ratio of the refractive index of the second core 22 minus the refractive index of the cladding 24 with respect to the refractive index of the cladding 24 is 0.0228.

In a third preferred combination, the first polymerizable material preferably contains 3FM and MMA, the second polymerizable material preferably contains MMA and BZMA, and the third polymerizable material preferably contains MMA, BZMA and DPS. In this case, the preferred composition of the first polymerizable material contains 10 parts by weight of 3FM added to 100 parts by weght of MMA (refractive index: 1.485), the second polymerizable material contains 20 parts by weight of BZMA added to 100 parts by weight of MMA (refractive index: 1.505) and the preferred composition of the third polymerizable material contains 50 parts by weight of BEN added to 100 parts by weight of MMA (refractive index: 1.517). In the POF thus obtained, the ratio of the refractive index of the first core 21 minus the refractive index of the cladding 24 with respect to the refractive index of the cladding 24 is 0.0135. Also, the ratio of the refractive index of the second core 22 minus the refractive index of the cladding 24 with respect to the refractive index of the cladding 24 is 0.0218.

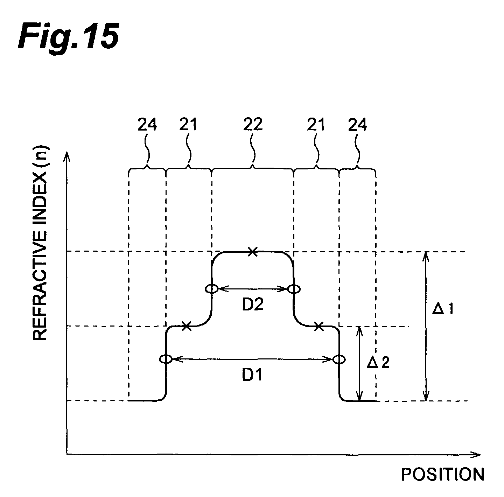

In the POF of this embodiment, gradual refractive index distributions may be attained in the vicinity of the boundary surface between the cladding 24 and first core 21 and/or the boundary surface between the first core 21 and second core 22, as shown in Fig. 15, as long as the diameter (D1) of the first core 21, the diameter (D2) of the second core 22, the difference ($n_2 - n_0$) between the refractive index ($n_2$) of the second core 22 and the refractive index ($n_0$) of the cladding 24, and the difference ($n_1 - n_0$) between the refractive index ($n_1$) of the first core 21 and the refractive index ($n_0$) of the cladding 24 are distinct.

In this case, the diameter (D1) of the first core 21 and the diameter (D2) of the second core 22 are determined as follows.

First, determined are four points where the rate of change in refractive index is large (indicated by circle in Fig. 15). Of these four points, the distance between the inner two points is the diameter (D2) of the second core 22, whereas the distance between the outer two points is the diameter (D1) of the first core 21.

The refractive index ($n_1$) of the first core 21 and the refractive index ($n_2$) of the second core 22 are determined as follows. Namely, in the first core 21 and second core 22, determined are three points where the rate of change in refractive index is the smallest (indicated by X in Fig. 15). Among these three points, the one with the highest refractive index value is the refractive index ($n_2$) of the second core 22, whereas the refractive index at the remaining two points is the refractive index ($n_1$) of the first core 21. In the case where such a refractive index distribution is exhibited, the refractive index profile approximates a focusing distribution, whereby a POF having a broader bandwidth is likely to be obtained.

In order to obtain such a POF, the monomer is not completely polymerized in the first step of the method of making the POF in accordance with the second embodiment, and the second step is performed while a part of the monomer exists in an unpolymerized form. As a result, the unpolymerized monomer in the first polymerizable material mingles with the second polymerizable material. As polymerization proceeds while in this mixed state, the ratio of a polymer having a higher refractive index becomes lower as it is distanced farther from the boundary surface between the cladding layer 24a and first core layer 21a toward the cladding layer 24a, whereas this ratio becomes higher as the polymer is distanced farther from the boundary surface toward the first core layer 21a. As a result, in thus obtained POF, the refractive index gradually increases from the cladding 24 toward the first core 21. Consequently, a gradual refractive index distribution is formed in the vicinity of the boundary surface between the cladding 24 and the first core 21. Similarly, without completely polymerizing the monomer in the second step, the third step is performed while a part of the monomer exists in an unpolymerized state. As a result, a gradual refractive index distribution is formed in the vicinity of the boundary surface between the first core 21 and the second core 22. Thus manufactured POF preform 25 is thermally drawn so as to attain a desired diameter. Consequently, a POF having a refractive index distribution such as that shown in Fig. 10 is made.

In the following, the present invention will be explained in more detail with reference to Examples, which by no means restrict the present invention. In the following Examples 1 to 28 and Comparative Examples 1 to 86, the preform manufacturing apparatus shown in Fig. 3 was used.

Examples 1 to 18 and Comparative Examples 1 to 78

(Corresponding to First Embodiment)

(Example 1)

Into a horizontally held cylindrical tube 13 having a length of 60 cm and an inner diameter of 28 mm, 276 g of methyl methacrylate were introduced. Then, n-butyl mercaptan and benzyl peroxide (BPO) were added thereto such that n-butyl mercaptan, as a chain transfer agent, and BPO, as a polymerization initiator, each had a concentration of 0.15% by weight in the first polymerizable material. Thereafter, the opening 13a of the cylindrical tube 13 was covered with the cylinder end sealing lid 14. Then, thermal polymerization was effected for 20 hours at 70°C under an atmospheric pressure while the cylindrical tube 13 was rotated at 1,300 rpm around its center axis C2. Thus obtained was the cladding layer 4a containing poly(methyl methacrylate), with an outer diameter of 28 mm and an inner diameter of 22.0 mm, which was to become the cladding 4 (Fig. 4).

Thereafter, 164 ml of a mixed solution comprising methyl methacrylate and diphenyl sulfide, which is a low molecular weight organic material, in a weight ratio of 24:5 were prepared. Then obtained by an operation similar to the above-mentioned step was a laminated cylinder, with an outer diameter of 28 mm and an inner diameter of 17.6 mm, comprising the cladding layer 4a and the first core layer 1a to become the first core 1 (Fig. 5).

Subsequently, 106 ml of a mixed solution comprising methyl methacrylate and diphenyl sulfide in a weight ratio of 7:2 was prepared. Then obtained by an operation similar to the above-mentioned step was a laminated cylinder, with an outer diameter of 28 mm and an inner diameter of 14.0 mm, comprising the cladding layer 4a, the first core layer 1a, and the second core layer 2a to become the second core 2 (Fig. 6).

Further, 154 ml of a mixed solution comprising methyl methacrylate and diphenyl sulfide in a weight ratio of 3:1 were prepared. Then obtained by an operation similar to the above-mentioned step was a laminated cylinder, with an outer diameter of 28 mm and an inner diameter of 4.0 mm, comprising the cladding layer 4a, the first core layer 1a, the second core layer 2a, and the third core layer 3a to become the third core 3 (Fig. 7).

Thereafter, one side of the cylindrical tube 13 was sealed with the lid 14. Then, with the cock 12b opened, the cylindrical tube 13 was inserted into the cylindrical heater 10 while the pressure within the cylindrical tube 13 was vacuumed to 660 mmHg, and the heater 10 was adjusted to 140°C so as to heat the cylindrical tube 13. In this state, the cylindrical tube 13 was moved at 2 mm/min along its longitudinal axis, thereby extinguishing the columnar space within the third core layer 3a. As a result, a preform 5 was obtained (Fig. 8).

The preform 5 was thermally drawn while indirectly being heated within a heater adjusted to 250°C. Thus obtained was a POF with an outer diameter of 0.75 mm (thickness of the cladding 4 = 0.125 mm, refractive index ($n_0$) of the cladding 4 = 1.492, diameter (D1) of the first core 1 = 0.50 mm), the ratio $\Delta n$ ($= (n_3 - n_0)/n_0$) of the difference ($n_3 - n_0$) between the refractive index ($n_3$) of the third core layer 3a and the refractive index ($n_0$) of the cladding layer 4a to the refractive index ($n_0$) of the cladding layer 4a = 2.36%, X1 = 0.64, X2 = 0.80, Y1 = 0.09, and Y2 = 0.30 (see Fig. 2).

In the POF manufactured in Example 1, though there was a tendency that the individual core materials slightly mingle with each other between the cores, the ratio of the area of the constant portion of the refractive index (corresponding to the flat portions of the refractive index curve shown in Fig. 2) to the total area of each core was 80% or higher. Substantially the same tendency was also observed in Examples 2 to 18 which will be explained later.

The bandwidth of this POF was measured by use of a 650-nm LD and a sampling oscilloscope (model OOS-01 manufactured by Hamamatsu Photonics K.K.). The bandwidth of the POF was measured (with a numerical aperture of 0.4) according to pulse method as the number of pulses per 100 m which could be transmitted by a distance yielding an attenuation to -3 dB. Also, the transmission loss of the POF was measured, as a value at a wavelength of 650 nm, by use of a white light source and a spectrum analyzer (model AQ6315B manufactured by Ando Electric Co., Ltd.). Table 1 shows the results thereof. The bandwidth of the POF obtained in this Example was 1.2 GHz · 100 m, and its transmission loss was 150 dB/km.

TABLE 1

| | D1 (mm) | D2 (mm) | D3 (mm) | Refractive index of cladding $n_0$ | Refractive index of first core $n_1$ | Refractive index of second core $n_2$ | Refractive index of third core $n_3$ | X1 (*1) | X2 (*2) | Y1 (*3) | Y2 (*4) | Bandwidth (MHz·100m) | $\Delta n$ (%) |
|---|---|---|---|---|---|---|---|---|---|---|---|---|---|
| Example 1 | 0.5 | 0.4 | 0.32 | 1.492 | 1.517 | 1.524 | 1.527 | 0.64 | 0.8 | 0.09 | 0.3 | 1200 | 2.36 |
| Example 2 | 0.5 | 0.4 | 0.32 | 1.492 | 1.496 | 1.524 | 1.527 | 0.64 | 0.8 | 0.09 | 0.9 | 350 | 2.36 |
| Example 3 | 0.5 | 0.475 | 0.32 | 1.492 | 1.517 | 1.524 | 1.527 | 0.64 | 0.95 | 0.09 | 0.3 | 700 | 2.36 |
| Example 4 | 0.5 | 0.475 | 0.32 | 1.492 | 1.496 | 1.524 | 1.527 | 0.64 | 0.95 | 0.09 | 0.9 | 350 | 2.36 |
| Example 5 | 0.5 | 0.4 | 0.28 | 1.492 | 1.517 | 1.524 | 1.527 | 0.56 | 0.8 | 0.09 | 0.3 | 900 | 2.36 |
| Example 6 | 0.5 | 0.4 | 0.28 | 1.492 | 1.496 | 1.524 | 1.527 | 0.56 | 0.8 | 0.09 | 0.9 | 300 | 2.36 |
| Example 7 | 0.5 | 0.475 | 0.28 | 1.492 | 1.517 | 1.524 | 1.527 | 0.56 | 0.95 | 0.09 | 0.3 | 300 | 2.36 |
| Example 8 | 0.5 | 0.475 | 0.28 | 1.492 | 1.496 | 1.524 | 1.527 | 0.56 | 0.95 | 0.09 | 0.9 | 300 | 2.36 |
| Example 9 | 0.5 | 0.475 | 0.32 | 1.492 | 1.528 | 1.539 | 1.544 | 0.64 | 0.95 | 0.09 | 0.3 | 430 | 3.5 |
| Example 10 | 0.5 | 0.4 | 0.32 | 1.418 | 1.433 | 1.436 | 1.439 | 0.64 | 0.8 | 0.12 | 0.3 | 1600 | 1.5 |
| Example 11 | 0.5 | 0.4 | 0.32 | 1.418 | 1.420 | 1.436 | 1.439 | 0.64 | 0.8 | 0.12 | 0.9 | 500 | 1.5 |
| Example 12 | 0.5 | 0.475 | 0.32 | 1.418 | 1.433 | 1.436 | 1.439 | 0.64 | 0.95 | 0.12 | 0.3 | 900 | 1.5 |
| Example 13 | 0.5 | 0.475 | 0.32 | 1.418 | 1.420 | 1.436 | 1.439 | 0.64 | 0.95 | 0.12 | 0.9 | 500 | 1.5 |
| Example 14 | 0.5 | 0.4 | 0.32 | 1.492 | 1.517 | 1.523 | 1.527 | 0.64 | 0.8 | 0.12 | 0.3 | 900 | 2.36 |
| Example 15 | 0.5 | 0.4 | 0.32 | 1.492 | 1.496 | 1.523 | 1.527 | 0.64 | 0.8 | 0.12 | 0.9 | 300 | 2.36 |
| Example 16 | 0.5 | 0.475 | 0.32 | 1.492 | 1.517 | 1.523 | 1.527 | 0.64 | 0.95 | 0.12 | 0.3 | 600 | 2.36 |
| Example 17 | 0.5 | 0.475 | 0.32 | 1.492 | 1.496 | 1.523 | 1.527 | 0.64 | 0.95 | 0.12 | 0.9 | 300 | 2.36 |
| Example 18 | 0.5 | 0.4 | 0.32 | 1.492 | 1.528 | 1.539 | 1.544 | 0.64 | 0.8 | 0.09 | 0.3 | 700 | 3.5 |

*1: D3/D1, *2: D2/D1, *3: $(n_3-n_2)/(n_3-n_0)$, *4: $(n_3-n_1)/(n_3-n_0)$,

Thus, the POF of this Example exhibited a very wide bandwidth of 1,200 MHz · 100 m or more, and its transmission loss was sufficiently lower than that of the conventional POF having a single core layer, thus yielding a very high transmission characteristic.

(Examples 2 to 9)

POFs were manufactured similarly to Example 1 except that D1, D2, D3, $n_0$, $n_1$, $n_2$, $n_3$, X1, X2, Y1, Y2, and $\Delta n$ attained their values shown in Table 1, and the bandwidth was measured in each POF. The bandwidth in these POFs ranged from 300 to 900 MHz $\cdot$ 100 m, thus indicating their high transmission characteristics.

(Example 10)

The POF of Example 10 was made by the preform manufacturing apparatus shown in Fig. 3 as follows.

First, into a horizontally held cylindrical tube 13 made of glass having a length of 60 cm and an inner diameter of 35 mm, 511 g of 2,2,2-trifluoroethyl methacrylate were introduced. Then, n-butyl mercaptan and benzyl peroxide (BPO) were added thereto such that n-butyl mercaptan, as a chain transfer agent, and BPO, as a polymerization initiator, each had a concentration of 0.15% by weight in the first polymerizable material. Thereafter, with the opening 13a of the cylindrical tube 13 sealed with the cylinder end sealing lid 14, thermal polymerization was effected for 20 hours at 70°C under an atmospheric pressure while the cylindrical tube 13 was rotated at 1,300 rpm around its center axis C2. Thus obtained was the cladding layer 4a containing poly(2,2,2-trifluoroethyl methacrylate), with an outer diameter of 35 mm and an inner diameter of 28.0 mm, which was to become the cladding 4 (Fig. 4).

Thereafter, 268 ml of a mixed solution comprising 2,2,2-trifluoroethyl methacrylate and methyl methacrylate in a volume ratio of 4:1 were prepared. Then obtained by an operation similar to the above-mentioned step was a laminated cylinder, with an outer diameter of 35 mm and an inner diameter of 22.6 mm, comprising the cladding layer 4a and the first core layer 1a to become the first core 1 (Fig. 5).

Subsequently, 169 ml of a mixed solution comprising 2,2,2-trifluoroethyl methacrylate and methyl methacrylate in a volume ratio of 57:5 were prepared. Then obtained by an operation similar to the above-mentioned step was a laminated cylinder, with an outer diameter of 35 mm and an inner diameter of 18.4 mm, comprising the cladding layer 4a, the first core layer 1a, and the second core layer 2a to become the second core 2 (Fig. 6).

Further, 266 ml of a mixed solution comprising 2,2,2-trifluoroethyl methacrylate and methyl methacrylate in a volume ratio of 5:2 were prepared. Then obtained by an operation similar to the above-mentioned step was a laminated cylinder, in which the outer diameter was 35 mm, the inner diameter was 4.0 mm, and the difference ($n_3 - n_0$) between the refractive index ($n_3$) of the third core layer 3a and the refractive index ($n_0$) of the cladding layer 4a was 0.021, comprising the cladding layer 4a, the first core layer 1a, the second core layer 2a, and the third core layer 3a to become the third core 3 (Fig. 7).

Thereafter, with one side of the cylindrical tube 13 sealed with the lid 14, the cylindrical tube 13 was inserted into the cylindrical heater 10 adjusted to 140°C, while the pressure within the cylindrical tube 13 was vacuumed to 660 mmHg. In this state, the cylindrical tube 13 was moved at 5 mm/min along its longitudinal axis, so as to extinguish the columnar space within the third core layer 3a, thereby yielding a preform 5 (Fig. 8).

The preform 5 was thermally drawn while indirectly being heated within a heater adjusted to 250°C. Thus obtained was a POF with an outer diameter of 0.75 mm (thickness of the cladding 4 = 0.25 mm, refractive index ($n_0$) of the cladding 4 = 1.418, diameter (D1) of the first core 1 = 0.50 mm), $\Delta n$ = 1.500%, X1 = 0.64, X2 = 0.80, Y1 = 0.09, and Y2 = 0.30 (see Fig. 2). The bandwidth of this POF was measured similarly to Example 1. Thus measured bandwidth was 1.6 GHz $\cdot$ 100 m, thereby indicating a very high transmission characteristic.

(Examples 11 to 13)

POFs were manufactured similarly to Example 10 except that D1, D2, D3, $n_0$, $n_1$, $n_2$, $n_3$, X1, X2, Y1, Y2, and $\Delta n$ attained their values shown in Table 1. The bandwidth was measured in each POF similarly to Example 1. The bandwidth in these POFs ranged from 500 to 900 MHz $\cdot$ 100 m, thus indicating their high transmission characteristics.

(Examples 14 to 18)

POFs were manufactured similarly to Example 1 except that D1, D2, D3, $n_0$, $n_1$, $n_2$, $n_3$, X1, X2, Y1, Y2, and $\Delta n$ attained their values shown in Table 1. The bandwidth was measured in each POF similarly to Example 1. Thus obtained results are shown in Table 1. The bandwidth in these POFs ranged from 300 to 900 MHz $\cdot$ 100 m, thus indicating their high transmission characteristics.

(Comparative Examples 1 to 78)

POFs were manufactured similarly to Example 1 except that D1, D2, D3, $n_0$, $n_1$, $n_2$, $n_3$, X1, X2, Y1, Y2, and $\Delta n$ attained their values shown in Tables 2 to 5. The bandwidth was measured in each POF similarly to Example 1. Thus obtained results are shown in Tables 2 to 5. The bandwidths in these POFs were not greater than 220 MHz · 100 m, thus being substantially smaller than those of the above-mentioned POFs of Examples 1 to 18.

TABLE 2

| | D1 (mm) | D2 (mm) | D3 (mm) | Refractive index of cladding $n_0$ | Refractive index of first core $n_1$ | Refractive index of second core $n_2$ | Refractive index of third core $n_3$ | X1 (*1) | X2 (*2) | Y1 (*3) | Y2 (*4) | Bandwidth (MHz·100m) | Δn (%) |
|---|---|---|---|---|---|---|---|---|---|---|---|---|---|
| Comp. Ex. 1 | 0.5 | 0.475 | 0.045 | 1.492 | 1.496 | 1.526 | 1.527 | 0.09 | 0.95 | 0.04 | 0.9 | 150 | 2.36 |
| Comp. Ex. 2 | 0.5 | 0.475 | 0.045 | 1.492 | 1.517 | 1.526 | 1.527 | 0.09 | 0.95 | 0.04 | 0.3 | 180 | 2.36 |
| Comp. Ex. 3 | 0.5 | 0.475 | 0.045 | 1.492 | 1.524 | 1.526 | 1.527 | 0.09 | 0.95 | 0.04 | 0.1 | 150 | 2.36 |
| Comp. Ex. 4 | 0.5 | 0.4 | 0.045 | 1.492 | 1.496 | 1.526 | 1.527 | 0.09 | 0.8 | 0.04 | 0.9 | 150 | 2.36 |
| Comp. Ex. 5 | 0.5 | 0.4 | 0.045 | 1.492 | 1.524 | 1.526 | 1.527 | 0.09 | 0.8 | 0.04 | 0.1 | 200 | 2.36 |
| Comp. Ex. 6 | 0.5 | 0.125 | 0.045 | 1.492 | 1.496 | 1.526 | 1.527 | 0.09 | 0.25 | 0.04 | 0.9 | 100 | 2.36 |
| Comp. Ex. 7 | 0.5 | 0.125 | 0.045 | 1.492 | 1.517 | 1.526 | 1.527 | 0.09 | 0.25 | 0.04 | 0.3 | 100 | 2.36 |
| Comp. Ex. 8 | 0.5 | 0.125 | 0.045 | 1.492 | 1.524 | 1.526 | 1.527 | 0.09 | 0.25 | 0.04 | 0.1 | 180 | 2.36 |
| Comp. Ex. 9 | 0.5 | 0.475 | 0.045 | 1.492 | 1.496 | 1.524 | 1.527 | 0.09 | 0.95 | 0.09 | 0.9 | 150 | 2.36 |
| Comp. Ex.10 | 0.5 | 0.475 | 0.045 | 1.492 | 1.517 | 1.524 | 1.527 | 0.09 | 0.95 | 0.09 | 0.3 | 200 | 2.36 |
| Comp. Ex.11 | 0.5 | 0.4 | 0.045 | 1.492 | 1.496 | 1.524 | 1.527 | 0.09 | 0.8 | 0.09 | 0.9 | 150 | 2.36 |
| Comp. Ex.12 | 0.5 | 0.125 | 0.045 | 1.492 | 1.496 | 1.524 | 1.527 | 0.09 | 0.25 | 0.09 | 0.9 | 150 | 2.36 |
| Comp. Ex.13 | 0.5 | 0.125 | 0.045 | 1.492 | 1.517 | 1.524 | 1.527 | 0.09 | 0.25 | 0.09 | 0.3 | 200 | 2.36 |
| Comp. Ex.14 | 0.5 | 0.475 | 0.45 | 1.492 | 1.496 | 1.510 | 1.527 | 0.9 | 0.95 | 0.5 | 0.9 | 150 | 2.36 |
| Comp. Ex.15 | 0.5 | 0.4 | 0.25 | 1.492 | 1.517 | 1.524 | 1.527 | 0.50 | 0.8 | 0.09 | 0.9 | 220 | 2.36 |
| Comp. Ex.16 | 0.5 | 0.475 | 0.25 | 1.492 | 1.517 | 1.524 | 1.527 | 0.50 | 0.95 | 0.09 | 0.3 | 180 | 2.36 |
| Comp. Ex.17 | 0.5 | 0.4 | 0.25 | 1.492 | 1.517 | 1.523 | 1.527 | 0.50 | 0.8 | 0.12 | 0.3 | 220 | 2.36 |
| Comp. Ex.18 | 0.5 | 0.475 | 0.25 | 1.492 | 1.517 | 1.523 | 1.527 | 0.50 | 0.95 | 0.12 | 0.3 | 180 | 2.36 |
| Comp. Ex.19 | 0.5 | 0.4 | 0.25 | 1.492 | 1.496 | 1.524 | 1.527 | 0.50 | 0.8 | 0.09 | 0.9 | 180 | 2.36 |
| Comp. Ex.20 | 0.5 | 0.475 | 0.25 | 1.492 | 1.496 | 1.524 | 1.527 | 0.50 | 0.95 | 0.09 | 0.9 | 180 | 2.36 |

*1 : D3 / D1, *2 : D2 / D1, *3 : $(n_3-n_2) / (n_3-n_0)$, *4 : $(n_3-n_1) / (n_3-n_0)$,

TABLE 3

| | D1 (mm) | D2 (mm) | D3 (mm) | Refractive index of cladding n0 | Refractive index of first core n1 | Refractive index of second core n2 | Refractive index of third core n3 | X1 (*1) | X2 (*2) | Y1 (*3) | Y2 (*4) | Bandwidth (MHz·100m) | Δn (%) |
|---|---|---|---|---|---|---|---|---|---|---|---|---|---|
| Comp.Ex.21 | 0.5 | 0.4 | 0.25 | 1.492 | 1.496 | 1.523 | 1.527 | 0.50 | 0.8 | 0.12 | 0.9 | 180 | 2.36 |
| Comp.Ex.22 | 0.5 | 0.475 | 0.25 | 1.492 | 1.496 | 1.523 | 1.527 | 0.50 | 0.95 | 0.12 | 0.9 | 180 | 2.36 |
| Comp.Ex.23 | 0.5 | 0.4 | 0.35 | 1.492 | 1.517 | 1.524 | 1.527 | 0.70 | 0.8 | 0.09 | 0.3 | 180 | 2.36 |
| Comp.Ex.24 | 0.5 | 0.475 | 0.35 | 1.492 | 1.517 | 1.524 | 1.527 | 0.70 | 0.95 | 0.09 | 0.3 | 200 | 2.36 |
| Comp.Ex.25 | 0.5 | 0.4 | 0.35 | 1.492 | 1.517 | 1.523 | 1.527 | 0.70 | 0.8 | 0.12 | 0.3 | 220 | 2.36 |
| Comp.Ex.26 | 0.5 | 0.475 | 0.35 | 1.492 | 1.517 | 1.523 | 1.527 | 0.70 | 0.95 | 0.12 | 0.3 | 200 | 2.36 |
| Comp.Ex.27 | 0.5 | 0.4 | 0.35 | 1.492 | 1.496 | 1.524 | 1.527 | 0.70 | 0.8 | 0.09 | 0.9 | 120 | 2.36 |
| Comp.Ex.28 | 0.5 | 0.475 | 0.35 | 1.492 | 1.496 | 1.524 | 1.527 | 0.70 | 0.95 | 0.09 | 0.9 | 100 | 2.36 |
| Comp.Ex.29 | 0.5 | 0.4 | 0.35 | 1.492 | 1.496 | 1.523 | 1.527 | 0.70 | 0.8 | 0.12 | 0.9 | 180 | 2.36 |
| Comp.Ex.30 | 0.5 | 0.475 | 0.35 | 1.492 | 1.496 | 1.523 | 1.527 | 0.70 | 0.95 | 0.12 | 0.9 | 200 | 2.36 |
| Comp.Ex.31 | 0.5 | 0.375 | 0.28 | 1.492 | 1.517 | 1.524 | 1.527 | 0.56 | 0.75 | 0.09 | 0.3 | 220 | 2.36 |
| Comp.Ex.32 | 0.5 | 0.375 | 0.32 | 1.492 | 1.517 | 1.524 | 1.527 | 0.64 | 0.75 | 0.09 | 0.3 | 220 | 2.36 |
| Comp.Ex.33 | 0.5 | 0.375 | 0.28 | 1.492 | 1.517 | 1.523 | 1.527 | 0.56 | 0.75 | 0.12 | 0.3 | 220 | 2.36 |
| Comp.Ex.34 | 0.5 | 0.375 | 0.32 | 1.492 | 1.517 | 1.523 | 1.527 | 0.64 | 0.75 | 0.12 | 0.3 | 220 | 2.36 |
| Comp.Ex.35 | 0.5 | 0.375 | 0.28 | 1.492 | 1.496 | 1.524 | 1.527 | 0.56 | 0.75 | 0.09 | 0.9 | 180 | 2.36 |
| Comp.Ex.36 | 0.5 | 0.375 | 0.32 | 1.492 | 1.496 | 1.524 | 1.527 | 0.64 | 0.75 | 0.09 | 0.9 | 180 | 2.36 |
| Comp.Ex.37 | 0.5 | 0.375 | 0.28 | 1.492 | 1.496 | 1.523 | 1.527 | 0.56 | 0.75 | 0.12 | 0.9 | 180 | 2.36 |
| Comp.Ex.38 | 0.5 | 0.375 | 0.32 | 1.492 | 1.496 | 1.523 | 1.527 | 0.64 | 0.75 | 0.12 | 0.9 | 180 | 2.36 |
| Comp.Ex.39 | 0.5 | 0.49 | 0.28 | 1.492 | 1.517 | 1.524 | 1.527 | 0.56 | 0.98 | 0.09 | 0.3 | 180 | 2.36 |
| Comp.Ex.40 | 0.5 | 0.49 | 0.32 | 1.492 | 1.517 | 1.524 | 1.527 | 0.64 | 0.98 | 0.09 | 0.3 | 220 | 2.36 |

*1: D3/D1, *2: D2/D1, *3: $(n_3-n_2)/(n_3-n_0)$, *4: $(n_3-n_1)/(n_3-n_0)$,

TABLE 4

| | D1 (mm) | D2 (mm) | D3 (mm) | Refractive index of cladding $n_0$ | Refractive index of first core $n_1$ | Refractive index of second core $n_2$ | Refractive index of third core $n_3$ | X1 (*1) | X2 (*2) | Y1 (*3) | Y2 (*4) | Bandwidth (MHz·100m) | Δn (%) |
|---|---|---|---|---|---|---|---|---|---|---|---|---|---|
| Comp.Ex.41 | 0.5 | 0.49 | 0.28 | 1.492 | 1.517 | 1.523 | 1.527 | 0.56 | 0.98 | 0.12 | 0.3 | 180 | 2.36 |
| Comp.Ex.42 | 0.5 | 0.49 | 0.32 | 1.492 | 1.517 | 1.523 | 1.527 | 0.64 | 0.98 | 0.12 | 0.3 | 220 | 2.36 |
| Comp.Ex.43 | 0.5 | 0.49 | 0.28 | 1.492 | 1.496 | 1.524 | 1.527 | 0.56 | 0.98 | 0.09 | 0.9 | 180 | 2.36 |
| Comp.Ex.44 | 0.5 | 0.49 | 0.32 | 1.492 | 1.496 | 1.524 | 1.527 | 0.64 | 0.98 | 0.09 | 0.9 | 100 | 2.36 |
| Comp.Ex.45 | 0.5 | 0.49 | 0.28 | 1.492 | 1.496 | 1.523 | 1.527 | 0.56 | 0.98 | 0.12 | 0.9 | 180 | 2.36 |
| Comp.Ex.46 | 0.5 | 0.49 | 0.32 | 1.492 | 1.496 | 1.523 | 1.527 | 0.64 | 0.98 | 0.12 | 0.9 | 180 | 2.36 |
| Comp.Ex.47 | 0.5 | 0.4 | 0.28 | 1.492 | 1.517 | 1.525 | 1.527 | 0.56 | 0.8 | 0.05 | 0.3 | 220 | 2.36 |
| Comp.Ex.48 | 0.5 | 0.475 | 0.28 | 1.492 | 1.517 | 1.525 | 1.527 | 0.56 | 0.95 | 0.05 | 0.3 | 180 | 2.36 |
| Comp.Ex.49 | 0.5 | 0.4 | 0.32 | 1.492 | 1.517 | 1.525 | 1.527 | 0.64 | 0.8 | 0.05 | 0.3 | 220 | 2.36 |
| Comp.Ex.50 | 0.5 | 0.475 | 0.32 | 1.492 | 1.517 | 1.525 | 1.527 | 0.64 | 0.95 | 0.05 | 0.3 | 180 | 2.36 |
| Comp.Ex.51 | 0.5 | 0.4 | 0.28 | 1.492 | 1.496 | 1.525 | 1.527 | 0.56 | 0.8 | 0.05 | 0.9 | 180 | 2.36 |
| Comp.Ex.52 | 0.5 | 0.475 | 0.28 | 1.492 | 1.496 | 1.525 | 1.527 | 0.56 | 0.95 | 0.05 | 0.9 | 180 | 2.36 |
| Comp.Ex.53 | 0.5 | 0.4 | 0.32 | 1.492 | 1.496 | 1.525 | 1.527 | 0.64 | 0.8 | 0.05 | 0.9 | 180 | 2.36 |
| Comp.Ex.54 | 0.5 | 0.475 | 0.32 | 1.492 | 1.496 | 1.525 | 1.527 | 0.64 | 0.95 | 0.05 | 0.9 | 180 | 2.36 |
| Comp.Ex.55 | 0.5 | 0.4 | 0.28 | 1.492 | 1.517 | 1.522 | 1.527 | 0.56 | 0.8 | 0.15 | 0.3 | 220 | 2.36 |
| Comp.Ex.56 | 0.5 | 0.475 | 0.28 | 1.492 | 1.517 | 1.522 | 1.527 | 0.56 | 0.95 | 0.15 | 0.3 | 180 | 2.36 |
| Comp.Ex.57 | 0.5 | 0.4 | 0.32 | 1.492 | 1.517 | 1.522 | 1.527 | 0.64 | 0.8 | 0.15 | 0.3 | 220 | 2.36 |
| Comp.Ex.58 | 0.5 | 0.475 | 0.32 | 1.492 | 1.517 | 1.522 | 1.527 | 0.64 | 0.95 | 0.15 | 0.3 | 220 | 2.36 |
| Comp.Ex.59 | 0.5 | 0.4 | 0.28 | 1.492 | 1.496 | 1.522 | 1.527 | 0.56 | 0.8 | 0.15 | 0.9 | 180 | 2.36 |
| Comp.Ex.60 | 0.5 | 0.475 | 0.28 | 1.492 | 1.496 | 1.522 | 1.527 | 0.56 | 0.95 | 0.15 | 0.9 | 180 | 2.36 |

*1: D3 / D1, *2: D2 / D1, *3: $(n_3-n_2) / (n_3-n_0)$, *4: $(n_3-n_1) / (n_3-n_0)$,

TABLE 5

| | D1 (mm) | D2 (mm) | D3 (mm) | Refractive index of cladding $n_0$ | Refractive index of first core $n_1$ | Refractive index of second core $n_2$ | Refractive index of third core $n_3$ | X1 (*1) | X2 (*2) | Y1 (*3) | Y2 (*4) | Bandwidth (MHz·100m) | $\Delta n$ (%) |
|---|---|---|---|---|---|---|---|---|---|---|---|---|---|
| Comp.Ex.61 | 0.5 | 0.4 | 0.32 | 1.492 | 1.496 | 1.522 | 1.527 | 0.64 | 0.8 | 0.15 | 0.9 | 180 | 2.36 |
| Comp.Ex.62 | 0.5 | 0.475 | 0.32 | 1.492 | 1.496 | 1.522 | 1.527 | 0.64 | 0.95 | 0.15 | 0.9 | 180 | 2.36 |
| Comp.Ex.63 | 0.5 | 0.4 | 0.28 | 1.492 | 1.518 | 1.524 | 1.527 | 0.56 | 0.8 | 0.09 | 0.25 | 220 | 2.36 |
| Comp.Ex.64 | 0.5 | 0.475 | 0.28 | 1.492 | 1.518 | 1.524 | 1.527 | 0.56 | 0.95 | 0.09 | 0.25 | 180 | 2.36 |
| Comp.Ex.65 | 0.5 | 0.4 | 0.32 | 1.492 | 1.518 | 1.524 | 1.527 | 0.64 | 0.8 | 0.09 | 0.25 | 180 | 2.36 |
| Comp.Ex.66 | 0.5 | 0.475 | 0.32 | 1.492 | 1.518 | 1.524 | 1.527 | 0.64 | 0.95 | 0.09 | 0.25 | 220 | 2.36 |
| Comp.Ex.67 | 0.5 | 0.4 | 0.28 | 1.492 | 1.518 | 1.523 | 1.527 | 0.56 | 0.8 | 0.12 | 0.25 | 180 | 2.36 |
| Comp.Ex.68 | 0.5 | 0.475 | 0.28 | 1.492 | 1.518 | 1.523 | 1.527 | 0.56 | 0.95 | 0.12 | 0.25 | 180 | 2.36 |
| Comp.Ex.69 | 0.5 | 0.4 | 0.32 | 1.492 | 1.518 | 1.523 | 1.527 | 0.64 | 0.8 | 0.12 | 0.25 | 250 | 2.36 |
| Comp.Ex.70 | 0.5 | 0.475 | 0.32 | 1.492 | 1.518 | 1.523 | 1.527 | 0.64 | 0.95 | 0.12 | 0.25 | 220 | 2.36 |
| Comp.Ex.71 | 0.5 | 0.4 | 0.28 | 1.492 | 1.494 | 1.524 | 1.527 | 0.56 | 0.8 | 0.09 | 0.95 | 180 | 2.36 |
| Comp.Ex.72 | 0.5 | 0.475 | 0.28 | 1.492 | 1.494 | 1.524 | 1.527 | 0.56 | 0.95 | 0.09 | 0.95 | 180 | 2.36 |
| Comp.Ex.73 | 0.5 | 0.4 | 0.32 | 1.492 | 1.494 | 1.524 | 1.527 | 0.64 | 0.8 | 0.09 | 0.95 | 120 | 2.36 |
| Comp.Ex.74 | 0.5 | 0.475 | 0.32 | 1.492 | 1.494 | 1.524 | 1.527 | 0.64 | 0.95 | 0.09 | 0.95 | 180 | 2.36 |
| Comp.Ex.75 | 0.5 | 0.4 | 0.28 | 1.492 | 1.494 | 1.523 | 1.527 | 0.56 | 0.8 | 0.12 | 0.95 | 180 | 2.36 |
| Comp.Ex.76 | 0.5 | 0.475 | 0.28 | 1.492 | 1.494 | 1.523 | 1.527 | 0.56 | 0.95 | 0.12 | 0.95 | 180 | 2.36 |
| Comp.Ex.77 | 0.5 | 0.4 | 0.32 | 1.492 | 1.494 | 1.523 | 1.527 | 0.64 | 0.8 | 0.12 | 0.95 | 180 | 2.36 |
| Comp.Ex.78 | 0.5 | 0.475 | 0.28 | 1.492 | 1.494 | 1.523 | 1.527 | 0.64 | 0.95 | 0.12 | 0.95 | 180 | 2.36 |

*1: D3 / D1,  *2: D2 / D1,  *3: $(n_3-n_2) / (n_3-n_0)$,  *4: $(n_3-n_1) / (n_3-n_0)$,

Examples 19 to 28 and Comparative Examples 79 to 86

(Corresponding to Second Embodiment)

(Example 19)

First, into a horizontally held cylindrical tube 13 having a length of 60 cm and an inner diameter of 28 mm, 164 g (assumed to be 100 parts by weight) of methyl methacrylate were introduced. Then, 0.15 part by weight of n-butyl mercaptan, as a chain transfer agent, and 0.50 part by weight of benzyl peroxide (BPO), as a polymerization initiator, were added thereto. Thereafter, with the opening 13a of the cylindrical tube 13 sealed with the sealing lid 14, thermal polymerization was effected for 20 hours at 70°C under an atmospheric pressure while the cylindrical tube 13 was rotated at 1,300 rpm around its center axis C2. Thus obtained was the cladding layer 24a containing poly(methyl methacrylate), with an outer diameter of 28 mm and an inner diameter of 22.0 mm, which was to become the cladding 24, as shown in Fig. 11.

Then, added to the inside of the horizontally held cladding layer 24a were 100 ml (assumed to be 100 parts by weight) of a solution in which methyl methacrylate and diphenyl sulfide had been mixed in a weight ratio of 6:1. Further, 0.15 part by weight of n-butyl mercaptan, as a chain transfer agent, and 0.50 part by weight of benzyl peroxide (BPO), as a polymerization initiator, were added thereto. Thereafter, with the opening 13a of the cylindrical tube 13 sealed with the sealing lid 14, thermal polymerization was effected for 20 hours at 70°C under an atmospheric pressure while the cylindrical tube 13 was rotated at 1,300 rpm around its center axis C2. Thus obtained was a laminated cylinder containing poly(methyl methacrylate), with an outer diameter of 28 mm and an inner diameter of 18 mm, in which the first core layer 21a to become the first core 21 was added to the inside of the cladding layer 24a, as shown in Fig. 12.

Subsequently, added to the inside of the horizontally held first core layer 21a were 180 ml (assumed to be 100 parts by weight) of a solution in which methyl methacrylate and diphenyl sulfide had been mixed in a weight ratio of 4:1. Further, 0.15 part by weight of n-butyl mercaptan, as a chain transfer agent, and 0.50 part by weight of benzyl peroxide (BPO), as a polymerization initiator, were added thereto. Thereafter, with the opening 13a of the cylindrical tube 13 sealed with the sealing lid 14, thermal polymerization was effected for 20 hours at 70°C under an atmospheric pressure while the cylindrical tube 13 was rotated at 1,300 rpm around its center axis C2. Thus obtained was a laminated cylinder containing poly(methyl methacrylate), with an outer diameter of 28 mm and an inner diameter of 4 mm, in which the second core layer 22a to become the second core 22 was added to the inside of the first core layer 21a, as shown in Fig. 12, thus comprising the cladding layer 24a, first core layer 21a, and second core layer 22a.

Then, thus obtained laminated cylinder was taken out from the cylindrical tube 13. Thereafter, the laminated cylinder was covered with a heat-shrinkable tube made of Teflon having a diameter of 30 mm which can shrink to 22 mm at most. Subsequently, the center portion of the laminated cylinder in its longitudinal axis was blown with hot air at 140°C for an hour. Thereafter, the whole laminated cylinder was further blown with the hot air for an hour. Thus, the laminated cylinder was completely collapsed, thereby yielding a POF preform 25 in which the diameter was 27 mm, the effective length was 55 cm, and the difference ($n_2 - n_0$) between the refractive index ($n_2$) of the second core layer 22a and the refractive index ($n_0$) of the cladding layer 24a was 0.028, as shown in Fig. 14.

This preform 25 was thermally drawn while being indirectly heated within a cylindrical heater adjusted to 250°C, thereby yielding a POF having a diameter of 0.75 mm. In this POF, the diameter (D1) of the first core 21 was 0.60 mm, whereas the diameter (D2) of the second core 22 was 0.48 mm. Also, the difference ($n_2 - n_0$) between the refractive index ($n_2$) of the second core 22 and the refractive index ($n_0$) of the cladding 24 was 0.028, whereas the difference ($n_1 - n_0$) between the refractive index ($n_1$) of the first core 21 and the refractive index ($n_0$) of the cladding 24 was 0.020.

As an optical characteristic of this POF, transmission loss was measured by use of a spectrum analyzer (model AQ6315B manufactured by Ando Electric Co., Ltd.) and a 650-nm LD, whereas the bandwidth was measured by use of a sampling oscilloscope (model OOS-01 manufactured by Hamamatsu Photonics K.K.) and a white light source. As a result, the bandwidth of thus obtained POF was 1 GHz · 100 m, and its transmission loss was 150 dB/km at a wavelength of 650 nm, thus indicating a high optical characteristic of the POF.

(Example 20)

Into a horizontally held cylindrical tube 13 made of glass having a length of 60 cm and an inner diameter of 35 mm, 300 g (assumed to be 100 parts by weight) of 2,2,2-trifluoroethyl methacrylate were introduced. Then, 0.12 part by weight of n-butyl mercaptan, as a chain transfer agent, and 0.30 part by weight of benzyl peroxide (BPO), as a polymerization initiator, were added thereto. Thereafter, with the opening 13a of the cylindrical tube 13 sealed with the sealing lid 14, thermal polymerization was effected for 20 hours at 70°C under an atmospheric pressure while the cylindrical tube 13 was rotated at 1,300 rpm around its center axis C2. Thus obtained was the cladding layer 24a, with an outer diameter of 35 mm and an inner diameter of 28 mm, which was to become the cladding 24, as shown in Fig. 11.

Then, added to the inside of the horizontally held cladding layer 24a were 220 ml (assumed to be 100 parts by weight) of a solution in which 2,2,2-trifluoroethyl methacrylate and methyl methacrylate had been mixed in a weight ratio of 6:1. Further, 0.12 part by weight of n-butyl mercaptan, as a chain transfer agent, and 0.30 part by weight of benzyl peroxide (BPO), as a polymerization initiator, were added thereto. Thereafter, with the opening 13a of the cylindrical tube 13 sealed with the sealing lid 14, thermal polymerization was effected for 20 hours at 70°C under an atmospheric pressure while the cylindrical tube 13 was rotated at 1,300 rpm around its center axis C2. Thus obtained was a laminated cylinder, with an outer diameter of 35 mm and an inner diameter of 18 mm, in which the first core layer 21a to become the first core 21 was added to the inside of the cladding layer 24a, as shown in Fig. 12.

Subsequently, added to the inside of the horizontally held first core layer 21a were 100 ml (assumed to be 100 parts by weight) of a solution in which 2,2,2-trifluoroethyl methacrylate and methyl methacrylate had been mixed in a weight ratio of 3:1. Further, 0.12 part by weight of n-butyl mercaptan, as a chain transfer agent, and 0.30 part by weight of benzyl peroxide (BPO), as a polymerization initiator, were added thereto. Thereafter, with the opening 13a of the cylindrical tube 13 sealed with the sealing lid 14, thermal polymerization was effected for 20 hours at 70°C under an atmospheric pressure while the cylindrical tube 13 was rotated at 1,300 rpm around its center axis C2. Thus obtained was a laminated cylinder, with an outer diameter of 35 mm and an inner diameter of 5 mm, in which the second core layer 22a to become the second core 22 was added to the inside of the first core layer 21a as shown in Fig. 13, and the difference $(n_2 - n_0)$ between the refractive index $(n_2)$ of the second core layer 22a and the refractive index $(n_0)$ of the cladding layer 24a was 0.022.

Thus obtained laminated cylinder was taken out from the cylindrical tube 13. Thereafter, one end of the laminated cylinder was sealed with an aluminum tape. Then, while the space within this laminated cylinder was held at 660 mmHg, the laminated cylinder was introduced from thus sealed end into a circular heater maintained at 120°C. The laminated cylinder was moved along its longitudinal direction at a velocity of 5 mm/min by means of a feeder, while being indirectly heated, whereby it was completely collapsed without bubbling (Fig. 14). Thus, a preform 25 was obtained. In the preform 25, the diameter was 34 mm, and the effective length was 55 cm.

This preform 25 was thermally drawn while being indirectly heated within a cylindrical heater adjusted to 250°C, thereby yielding a POF having a diameter of 0.75 mm. In this POF, the diameter (D1) of the first core 21 was 0.6 mm, whereas the diameter (D2) of the second core 22 was 0.36 mm. Also, the difference $(n_2 - n_0)$ between the refractive index $(n_2)$ of the second core 22 and the refractive index $(n_0)$ of the cladding 24 was 0.022, whereas the difference $(n_1 - n_0)$ between the refractive index $(n_1)$ of the first core 21 and the refractive index $(n_0)$ of the cladding 24 was 0.013.

The optical characteristic of this POF was measured similarly to Example 19. As a result, the bandwidth of thus obtained POF was 800 MHz · 100 m, and its transmission loss was 160 dB/km at a wavelength of 650 nm, thus indicating a high optical characteristic of the POF.

(Example 21)

The laminated cylinder comprising the cladding layer 24a, first core layer 21a, and second core layer 22a as shown in Fig. 13 was made in a manner similar to Example 19 except that a cylindrical tube 13 having a length of 60 cm and a diameter of 50 mm was used.

Thus obtained laminated cylinder was taken out from the cylindrical tube 13. Thereafter, one end of the laminated cylinder was sealed with an aluminum tape. Then, while the space within this laminated cylinder was held at 550 mmHg, the laminated cylinder was introduced from thus sealed end into a circular heater maintained at 150°C and was indirectly heated thereby. Here, the laminated cylinder was moved along its longitudinal direction at a velocity of 5 mm/min by means of a feeder. Then, it was completely collapsed without bubbling, thereby yielding a POF preform 25. In this POF preform 25, the diameter was 50 mm, and the effective length was 55 cm.

Thus obtained POF preform 25 was thermally drawn while being indirectly heated within a cylindrical heater adjusted to 250°C, thereby yielding a POF having a diameter of 0.60 mm. In this POF, the diameter (D1) of the first core 21 was 0.48 mm, whereas the diameter (D2) of the second core 22 was 0.36 mm. Also, the difference $(n_2 - n_0)$ between the refractive index $(n_2)$ of second core 22 and the refractive index $(n_0)$ of the cladding 24 was 0.028, whereas the difference $(n_1 - n_0)$ between the refractive index $(n_1)$ of first core 21 and the refractive index $(n_0)$ of the cladding 24 was 0.020.

The optical characteristic of this POF was measured similarly to Example 19. As a result, the bandwidth of thus obtained POF was 830 MHz · 100 m, and its transmission loss was 155 dB/km at a wavelength of 650 nm, thus indicating a high optical characteristic of the POF.

(Examples 22 to 28 and Comparative Examples 79 to 86)

POFs were manufactured similarly to Example 19 except that D1, D2, $n_0$, $n_1$, $n_2$, X, Y, and X + Y attained their values shown in Table 6. The bandwidth was measured in each POF similarly to Example 19. Thus obtained results are shown in Table 6.

TABLE 6

| | D1 (mm) | D2 (mm) | Refractive index of cladding $n_0$ | Refractive index of first core $n_1$ | Refractive index of second core $n_2$ | X (*1) | Y (*2) | X+Y | Bandwidth (MHz · 100 m) |
|---|---|---|---|---|---|---|---|---|---|
| Example 22 | 0.48 | 0.456 | 1.492 | 1.519 | 1.520 | 0.95 | 0.95 | 1.9 | 200 |
| Example 23 | 0.48 | 0.456 | 1.492 | 1.512 | 1.520 | 0.95 | 0.70 | 1.65 | 250 |
| Example 24 | 0.48 | 0.384 | 1.492 | 1.519 | 1.520 | 0.80 | 0.95 | 1.75 | 300 |
| Example 25 | 0.48 | 0.384 | 1.492 | 1.512 | 1.520 | 0.80 | 0.70 | 1.5 | 1000 |
| Example 26 | 0.48 | 0.384 | 1.492 | 1.505 | 1.520 | 0.80 | 0.45 | 1.25 | 300 |
| Example 27 | 0.48 | 0.216 | 1.492 | 1.519 | 1.520 | 0.45 | 0.95 | 1.4 | 250 |
| Example 28 | 0.48 | 0.216 | 1.492 | 1.512 | 1.520 | 0.45 | 0.70 | 1.15 | 300 |
| Comp. Ex.79 | 0.48 | 0.456 | 1.492 | 1.502 | 1.520 | 0.95 | 0.35 | 1.3 | 150 |
| Comp. Ex.80 | 0.48 | 0.384 | 1.492 | 1.502 | 1.520 | 0.80 | 0.35 | 1.15 | 150 |
| Comp. Ex.81 | 0.48 | 0.216 | 1.492 | 1.505 | 1.520 | 0.45 | 0.45 | 0.9 | 110 |
| Comp. Ex.82 | 0.48 | 0.216 | 1.492 | 1.502 | 1.520 | 0.45 | 0.35 | 0.8 | 100 |
| Comp. Ex.83 | 0.48 | 0.120 | 1.492 | 1.519 | 1.520 | 0.25 | 0.95 | 1.2 | 150 |
| Comp. Ex.84 | 0.48 | 0.120 | 1.492 | 1.512 | 1.520 | 0.25 | 0.70 | 0.95 | 120 |
| Comp. Ex.85 | 0.48 | 0.120 | 1.492 | 1.505 | 1.520 | 0.25 | 0.45 | 0.7 | 90 |
| Comp. Ex.86 | 0.48 | 0.120 | 1.492 | 1.502 | 1.520 | 0.25 | 0.35 | 0.6 | 90 |

*1 : D2/D1,

*2 : $(n_1-n_0)/(n_2-n_0)$,

As can be seen from Table 6, each POF of Examples 22 to 28 exhibited a broad bandwidth. By contrast, each POF of Comparative Examples 79 to 86 exhibited a bandwidth not greater than 150 MHz · 100 m, thus indicating that the bandwidth was narrow.

As explained in the foregoing, the POF of the present invention is useful since it has an excellent optical characteristic, such as a broad bandwidth in particular, though its core comprises two or three layers. Further, since the POF of the present invention comprises two or three core layers, it can be made more easily than the conventional POF having four core layers or GI-type POF, thus allowing its manufacturing cost to decrease.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

**Claims**

1. A plastic optical fiber comprising a cladding, a first core disposed inside said cladding, and a second core disposed inside said first core;

   wherein a ratio X of a diameter (D2) of said second core to a diameter (D1) of said first core ($= D2/D1$ ), and

   a ratio Y of a difference ($n_1 - n_0$) between a refractive index ($n_1$) of said first core and a refractive index ($n_0$) of said cladding to a difference ($n_2 - n_0$) between a refractive index ($n_2$) of said second core and the refractive index ($n_0$) of said cladding ($= (n_1 - n_0)/(n_2 - n_0)$ ) satisfy the following relational expressions:

   $$0.3 \leq X \leq 0.95,$$

   $$0.4 \leq Y \leq 0.95,$$

   $$1 \leq X + Y \leq 1.9.$$

2. A plastic optical fiber according to claim 1, wherein the difference ($n_2 - n_0$) between the refractive index ($n_2$) of said second core and the refractive index ($n_0$) of said cladding is at least 0.01 but not greater than 0.1.

3. A plastic optical fiber according to claim 1, wherein said X is at least 0.5 but not greater than 0.9.

4. A plastic optical fiber according to claim 1, wherein said Y is at least 0.5 but not greater than 0.9.

5. A plastic optical fiber according to claim 1, wherein said (X + Y) is at least 1.3 but not greater than 1.7.

6. A plastic optical fiber according to claim 1, wherein said X is at least 0.7 but not greater than 0.9, said Y is at least 0.6 but not greater than 0.8, and said (X + Y) is at least 1.4 but not greater than 1.6.

7. A method of making the plastic optical fiber according to claim 1, said method comprising:

   a first step of injecting a first polymerizable material inside a cylindrical tube and polymerizing said first polymerizable material so as to form a cladding layer inside said cylindrical tube;
   a second step of injecting a second polymerizable material inside said cladding layer and polymerizing said second polymerizable material so as to form a first core layer inside said cladding layer such that a difference ($n_1 - n_0$) between a refractive index ($n_1$) of said first core layer and a refractive index ($n_0$) of said cladding layer becomes a predetermined value;
   a third step of injecting a third polymerizable material inside said first core layer and polymerizing said third polymerizable material so as to form a second core layer such that a ratio X of a thickness of said second core layer to a thickness of said first core layer, and a ratio Y of a difference ($n_1 - n_0$) between a refractive index ($n_1$) of said first core layer and a refractive index ($n_0$) of said cladding layer to a difference ($n_2 - n_0$) between a refractive index ($n_2$) of said second core layer and the refractive index ($n_0$) of said cladding layer ($= (n_1 - n_0)/(n_2 - n_0)$ ) satisfy the following relational expressions:

   $$0.3 \leq X \leq 0.95,$$

   $$0.4 \leq Y \leq 0.95,$$

   $$1 \leq X + Y \leq 1.9;$$

   a fourth step of extinguishing a space inside said second core layer so as to form a columnar preform for said plastic optical fiber; and
   a fifth step of thermally drawing said preform to yield said plastic optical fiber.

8. A plastic optical fiber comprising a cladding, a first core disposed inside said cladding, a second core disposed inside said first core, and a third core disposed inside said second core;

   wherein a ratio X1 of a diameter (D3) of said third core to a diameter (D1) of said first core ($= D3/D1$ ),

a ratio X2 of a diameter (D2) of said second core to the diameter (D1) of said first core (= D2/D1 ),

a ratio Y1 of a difference ($n_3$ - $n_2$) between a refractive index ($n_3$) of said third core and a refractive index ($n_2$) of said second core to a difference ($n_3$ - $n_0$) between the refractive index ($n_3$) of said third core and a refractive index ($n_0$) of said cladding (= ($n_3$ - $n_2$)/($n_3$ - $n_0$) ), and

a ratio Y2 of a difference ($n_3$ - $n_1$) between the refractive index ($n_3$) of said third core and a refractive index ($n_1$) of said first core to the difference ($n_3$ - $n_0$) between the refractive index ($n_3$) of said third core and the refractive index ($n_0$) of said cladding (= ($n_3$ - $n_1$)/($n_3$ - $n_0$) ) satisfy the following relational expressions:

$$0.53 \leq X1 \leq 0.67,$$

$$0.77 \leq X2 \leq 0.97,$$

$$0.07 \leq Y1 \leq 0.14,$$

$$0.27 \leq Y2 \leq 0.93.$$

9. A plastic optical fiber according to claim 8, wherein a ratio $\Delta n$ of a difference ($n_3$ - $n_0$) between the refractive index ($n_3$) of said third core and the refractive index ($n_0$) of said cladding to the refractive index ($n_0$) of said cladding (= ($n_3$ - $n_0$)/$n_0$ ) satisfies the following relational expression:

$$0.015 \leq \Delta n \leq 0.035.$$

10. A method of making the plastic optical fiber according to claim 8, said method comprising:

a first step of injecting a first polymerizable material inside a cylindrical tube and polymerizing said first polymerizable material so as to form a cladding layer inside said cylindrical tube;

a second step of injecting a second polymerizable material inside said cladding layer and polymerizing said second polymerizable material so as to form a first core layer inside said cladding layer;

a third step of injecting a third polymerizable material inside said first core layer and polymerizing said third polymerizable material so as to form a second core layer inside said first core layer such that a ratio X2 of a thickness of said second core layer to a thickness of said first core layer satisfies the following relational expression:

$$0.77 \leq X2 \leq 0.97;$$

a fourth step of injecting a fourth polymerizable material inside said second core layer and polymerizing said fourth polymerizable material so as to form a third core layer inside said second core layer such that a ratio X1 of a thickness of said third core layer to the thickness of said first core layer, a ratio Y1 of a difference ($n_3$ - $n_2$) between a refractive index ($n_3$) of said third core layer and a refractive index ($n_2$) of said second core layer to a difference ($n_3$ - $n_0$) between the refractive index ($n_3$) of said third core layer and a refractive index ($n_0$) of said cladding layer (= ($n_3$ - $n_2$)/($n_3$ - $n_0$) ), and a ratio Y2 of a difference ($n_3$ - $n_1$) between the refractive index ($n_3$) of said third core layer and a refractive index ($n_1$) of said first core layer to the difference ($n_3$ - $n_0$) between the refractive index ($n_3$) of said third core layer and the refractive index ($n_0$) of said cladding layer (= ($n_3$ - $n_1$)/($n_3$ - $n_0$) ) satisfy the following relational expressions:

$$0.53 \leq X1 \leq 0.67,$$

$$0.07 \leq Y1 \leq 0.14,$$

$$0.27 \leq Y2 \leq 0.93;$$

a fifth step of extinguishing a space inside said third core layer so as to form a columnar preform for said plastic optical fiber; and

a sixth step of thermally drawing said preform to yield said plastic optical fiber.

## Fig.1

## Fig.2

POSITION

# Fig.3

EP 0 844 501 A2

**Fig.4**

**Fig.5**

**Fig.6**

**Fig.7**

**Fig.8**

# *Fig.9*

# *Fig.10*

**Fig.11**

24a

**Fig.12**

24a
21a

**Fig.13**

24a
21a
22a

**Fig.14**

24a
21a
22a
25

## Fig.15

REFRACTIVE INDEX (n)

24 21 22 21 24

Δ1

Δ2

D2

D1

POSITION